# EUROPEAN PATENT SPECIFICATION

(11) **EP 3 136 248 B1**
(45) Date of publication and mention of the grant of the patent: **26.09.2018**
(21) Application number: 15782282.6
(22) Date of filing: 23.04.2015
(51) Int. Cl.: G06F 13/00, H04M 3/56, H04N 7/15, G06F 13/38, H04N 5/232, H04N 5/369

(54) **ACCESS MANAGEMENT SYSTEM, COMMUNICATION SYSTEM, RECORDING MEDIUM AND ACCESS MANAGEMENT METHOD**
ZUGANGSVERWALTUNGSSYSTEM, KOMMUNIKATIONSSYSTEM, AUFZEICHNUNGSMEDIUM UND ZUGANGSVERWALTUNGSVERFAHREN
SYSTÈME DE GESTION D'ACCÈS, SYSTÈME DE COMMUNICATION, SUPPORT D'ENREGISTREMENT ET PROCÉDÉ DE GESTION D'ACCÈS

(30) Priority: 23.04.2014 JP 2014088670
(43) Date of publication of application: 01.03.2017
(73) Proprietor: Ricoh Company, Ltd., Tokyo 143-8555 (JP)
(72) Inventor: HOMMA, Takeshi, Tokyo 143-8555 (JP); ASAI, Takahiro, Tokyo 143-8555 (JP); MAEDA, Kaoru, Tokyo 143-8555 (JP)
(74) Representative: Schwabe - Sandmair - Marx
(86) International application number: PCT/JP2015/062347
(87) International publication number: WO 2015/163396

(56) References cited:
- WO-A1-2011/004886
- WO-A1-2013/165023
- WO-A1-2014/057555
- JP-A- 2001 236 288
- JP-A- 2003 274 381
- JP-A- 2003 533 766
- JP-A- 2011 076 231
- US-A1- 2012 137 354

## Description

### Field

The present invention relates to management of access from a communication terminal to an application. Background

With the recent demand for reduction in cost and time taken for business trips, communication systems are widely used in which communication is performed via communication networks such as the Internet and leased lines. In a teleconference system, which is an example of the communication systems, a teleconference can be achieved by transmitting and receiving image data and sound data among a plurality of communication terminals (refer to

### Patent Literature 1).

A method is known in which a teleconference management system included in a teleconference system authenticates a communication terminal, notifies the communication terminal of uniform resource identifiers (URIs) of a transmission management system, an update system, and a screen provision system, and causes the communication system to access the respective systems (refer to Patent Literature 2). The method, in which the teleconference management system authenticates all of the communication terminals, eliminates the need for each system serving as an access destination to authenticate the communication terminal anew, thereby making it possible to reduce the load of authentication by the access destination.

For applications in the access destination, applications have been developed that operate without depending on platforms, such as a Java (registered trademark) application, for example. Those applications can provide a function to link different terminals, such as communication among different terminals, when the communication terminals having different platforms, such as a personal computer (PC) and a teleconference dedicated terminal, access the same application. In this case, the application side can also provide different functions such as a teleconference with high image quality and a teleconference with standard image quality for each communication terminal in accordance with a resolution of a camera provided to the communication terminal serving as an access origin, for example.

WO2013165023 relates to a communication system providing one communication terminal with two different communication functions using different communication protocols.

### Summary

### Technical Problem

When the application side provides different functions depending on the communication terminal serving as the access origin, the application side queries the communication terminal serving as the access origin a possible operation, and determines the function available in the communication terminal. As a result, a problem arises in that the load of the application side increases. Solution to Problem

The invention provides an access management system that manages access from a communication terminal to an application capable of providing different functions depending on the communication terminal. The access management system includes a function identification unit that identifies a function available in a communication terminal serving as an origin of the access to the application out of functions capable of being provided by the application based on a model of the communication terminal serving as the access origin; and a control unit that performs control such that function information indicating the function identified by the function identification unit is transmitted to the application serving as an access destination when the communication terminal serving as the access origin accesses the application.

### Advantageous Effects of Invention

According to the invention, the access management system identifies, based on the model of the communication terminal serving as the origin of access to the application, the function available in the communication terminal serving as the access origin, and performs control such that the function information indicating the identified function is transmitted to the application serving as the access destination. This eliminates, when the communication terminal accesses the application, the need for the application side to identify the function to be provided to the communication terminal. The invention, thus, has an advantageous effect of making it possible to reduce the load of the application side.

### Brief Description of Drawings

FIG. 1 is a schematic diagram of a communication system according to an embodiment of the present invention.
FIG. 2 is a flowchart illustrating a method of authentication and approval.
FIG. 3 is a flowchart illustrating another method of authentication and approval.
FIG. 4 is a schematic diagram illustrating an exemplary external view of a communication terminal.
FIG. 5 is a hardware structure diagram of the communication terminal.
FIG. 6 is a hardware structure diagram of another communication terminal.
FIG. 7 is a hardware structure diagram of an electronic blackboard.
FIG. 8 is a hardware structure diagram of a communication management system, a relaying apparatus, an application server, a program supply system, and a maintenance system.
FIG. 9 is a software structure diagram of the communication terminal.
FIG. 10 is functional block diagrams of the communication terminal, the communication management system, and the application server.
FIG. 11 is a conceptual diagram illustrating a terminal authentication management table.
FIG. 12 is a conceptual diagram illustrating an application use management table.
FIG. 13 is a conceptual diagram illustrating an application URL management table.
FIG. 14 is a conceptual diagram illustrating a terminal function management table.
FIG. 15 is a conceptual diagram illustrating an application function management table.
FIG. 16 is a conceptual diagram illustrating an access token management table.
FIG. 17 is a conceptual diagram illustrating a state of transmitting and receiving of various types of information in the communication system.
FIG. 18 is a sequence diagram illustrating processing at a preparatory stage for starting communication.
FIG. 19 is a sequence diagram illustrating processing up to a step at which application icons are displayed.
FIG. 20 is a sequence diagram illustrating processing to make a request to start an application.
FIG. 21 is a schematic diagram illustrating an exemplary screen of an application list.
FIG. 22 is a flowchart illustrating processing to approve the use of the application.
FIG. 23 is a conceptual diagram illustrating an exemplary display screen on a display.
FIG. 24 is a conceptual diagram illustrating another exemplary display screen on the display.
FIG. 25 is another sequence diagram illustrating processing up to the step at which the application icons are displayed.

### Description of Embodiments

The following describes an embodiment of the present invention with reference to the accompanying drawings.

### <<Overall structure of embodiment>>

### [First embodiment]

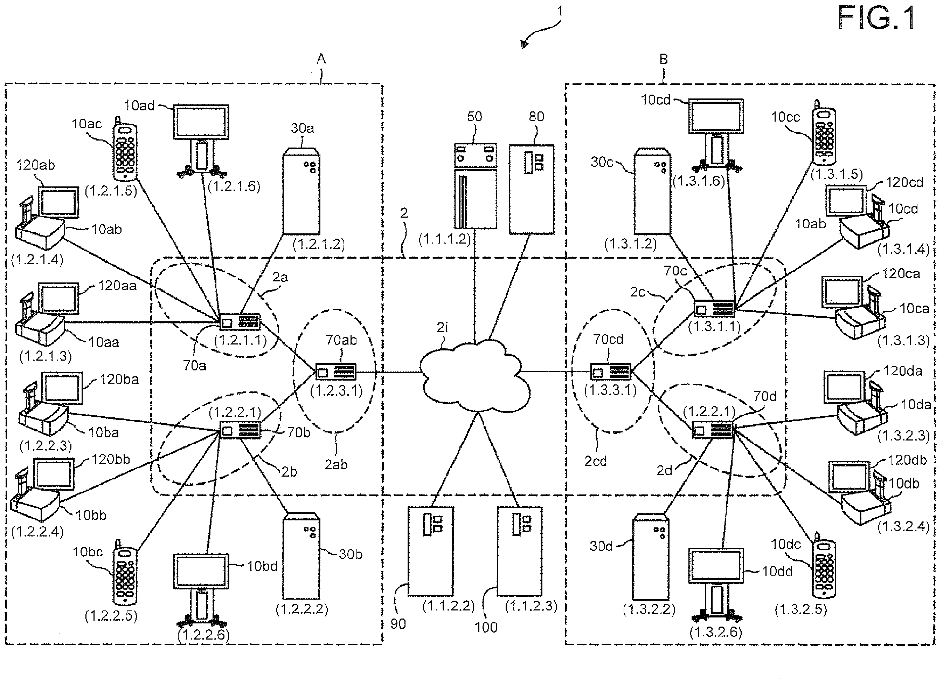

FIG. 1 is a schematic diagram of a communication system according to a first embodiment of the invention. As illustrated in FIG. 1, a communication system 1 includes a plurality of communication terminals (10aa, 10ab, etc.), displays (120aa, 120ab, etc.) for the respective communication terminals (10aa, 10ab, etc.), a plurality of relaying apparatuses (30a, 30b, 30c, and 30d), a communication management system 50, an application server 80, a program supply system 90, and a maintenance system 100.

Hereinafter, the "communication terminal" is simply expressed as the "terminal" while the "communication management system" is simply expressed as the "management system". Any terminal in the terminals (10aa, 10ab, etc.) is expressed as the "terminal 10". Any display of the displays (120aa, 120ab, etc.) is expressed as the "display 120". Any relaying apparatus of the relaying apparatuses (30a, 30b, and 30c) is expressed as the "relaying apparatus 30". Any router of routers (70a, 70b, 70c, 70d, 70ab, and 70cd) is expressed as the "router 70". The communication can be achieved by sounds, pictures (images), or sounds and pictures (images).

The communication system 1 can achieve a teleconference between remote locations by communication of image data and sound data, which are examples of communication data. The multiple routers (70a, 70b, 70c, 70d, 70ab, and 70cd) select an optimal route for communication data. The application server 80 manages various applications (online applications) that operate on each terminal 10. Each terminal 10 downloads various applications from the application server 80 to use them.

The terminals (10aa, 10ab, 10ac, etc.), the relaying apparatus 30a, and the router 70a are coupled to each other with a LAN 2a so as to enable communication among them. The terminals (10ba, 10bb, 10bc, etc.), the relaying apparatus 30b, and the router 70b are coupled to each other with a LAN 2b so as to enable communication among them. The LANs 2a and 2b are coupled to each other with a leased line 2ab including the router 70ab so as to enable communication therebetween. The LANs 2a and 2b and the leased line 2ab are built out in an area A. For example, the LAN 2a is built out in a business office in Tokyo of a certain company while the LAN 2b is built out in a business office in Osaka of the certain company.

The terminals (10ca, 10cb, 10cc, etc.), the relaying apparatus 30c, and the router 70c are coupled to each other with a LAN 2c so as to enable communication among them. The terminals 10d (10da, 10db, 10dc, etc.), the relaying apparatus 30d, and the router 70d are coupled to each other with a LAN 2d so as to enable communication among them. The LANs 2c and 2d are coupled to each other with a leased line 2cd including the router 70cd so as to enable communication therebetween. The LANs 2c and 2d and the leased line 2cd are built out in an area B. For example, the LAN 2c is built out in a business office in New York of a certain company while the LAN 2d is built out in a business office in Washington, D.C. of the certain company. The areas A and B are coupled to each other with the routers (70ab and 70cd) via the Internet 2i so as to enable communication therebetween.

Out of the terminals 10, the terminals (10aa, 10ba, 10ca, and 10da) are teleconference dedicated terminals, and each provided with a microphone for voice input and output, a speaker, and a camera for taking images in a range from standard image quality to high image quality. The terminals (10ab, 10bb, 10cb, and 10db) are inexpensive teleconference dedicated terminals, and each provided with a microphone for voice input and output, a speaker, and a camera for taking images with standard image quality. The terminals (10ac, 10bc, 10cc, and 10dc) are mobile phone terminals, and each provided with a microphone for voice input and output, and a speaker. The terminals (10ad, 10bd, 10cd, and 10dd) are electronic blackboards, and each provided with a controller for coordinate data input. The coordinate data is produced by the electronic blackboard electrically converting a stroke image such as characters, numbers, or graphics drawn by a user while touching a display with an electronic pen or a hand. The electronic blackboard transmits the coordinate data to another electronic blackboard via the management system 50. The other electronic blackboard reproduces the stroke image from the coordinate data. In such a manner, the stroke image drawn by one electronic blackboard is also displayed on the other electronic blackboard at a remote location. The electronic blackboards, thus, make conferences between remote locations more convenient, for example.

The management system 50, the application server 80, the program supply system 90, and the maintenance system 100 are connected to the Internet 2i. The management system 50, the program supply system 90, and the maintenance system 100 are not limited to being disposed at a specific location. The respective systems may be disposed in the same area or the same country, or in different areas or different countries.

A communication network 2 in the embodiment includes the LANs 2a and 2b, the leased lines 2ab and 2cd, the Internet 2i, and the LANs 2c and 2d. The communication network 2 may include a section in which communication is performed wirelessly such as wireless fidelity (WiFi) or Bluetooth (registered trademark) besides the wired transmission.

In FIG. 1, four numbers indicated under each terminal 10, each relaying apparatus 30, the management system 50, each router 70, the program supply system 90, and the maintenance system 100 simply represent commonly used IP addresses in IPv4. For example, the IP address of the terminal 10aa is "1.2.1.3". The IP address may be expressed in IPv6 instead of IPv4. However, the explanation is made using IPv4 for simple explanation.

The terminals 10 may be used together in communication made in the same room, or in communication made between an outdoor site and an indoor site or among the outdoor sites in addition to communication made among a plurality of business offices and communication made among different rooms in the same business office. When each terminal 10 is used at an outdoor site, communication is performed wirelessly such as a mobile phone communication network.

Each terminal 10 illustrated in FIG. 1 enables a user to perform communication by transmitting and receiving communication data. In addition, the terminal 10 transmits and receives communication data using a certain communication scheme (a call control scheme to connect or disconnect the destination of communication and an encoding scheme to convert communication data into an IP packet).

Examples of the call control scheme include protocols such as (1) a session initiation protocol (SIP), (2) H.323, (3) an extended SIP, (4) a protocol of an instant messenger, (5) a protocol using a message method of the SIP, (6) a protocol of internet relay chat (IRC), and (7) an extended version of the protocol of the instant messenger. The protocol of the instant messenger is used in (4-1) an extensible messaging and presence protocol (XMPP) or (4-2) ICQ (registered trademark), AIM (registered trademark), or Skype (registered trademark), for example. Furthermore, (7) the extended version of the protocol of the instant messenger is Jingle, for example.

The terminal 10 downloads applications for various uses from the application server 80 based on the user's operation, and uses them. The multiple terminals 10 that use the same application can establish communication among them via the communication network 2. Examples of the applications include communication applications and message applications. Besides teleconference applications, Skype, Google Talk, Line, FaceTime, Kakao Talk, and Tango (registered trademark or unregistered trademark) are exemplified.

The management system 50 manages information necessary to authenticate and approve the terminals 10, and has a function of an access approval system that authenticates the terminal 10 and approves the access to the applications. The application server 80 hosts uniform resource identifiers (URIs), which represent entities of the applications.

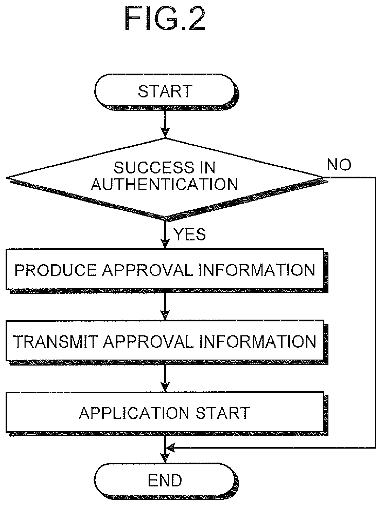

The terminal 10 can use various applications via the communication network 2. When the application is used, a system in which the application side independently performs authentication may be used as a method for preventing unauthorized use such as spoofing and information leakage. The method, however, requires each application side to establish a system that can safely manage personal information and the like for gaining the user's confidence. As a result, the load of the application side increases. When the user registers information about services including personal information in an access approval system and uses the application, a method is widely used in which the access approval system approves the use of the application, as illustrated in FIG. 2. FIG. 2 is a flowchart illustrating a method of authentication and approval. An example of the authentication and approval method using this method is OAuth2 (RFC6749).

In the method, the terminal requests authentication from the access approval system. If the authentication is successful (Yes at the determination of success in authentication), the access approval system produces approval information such as an access token indicating that the access to the application is approved, and transmits the approval information to the terminal. The terminal transmits the approval information to the application server to access the application. As a result, the application starts. The access approval system that authenticates all of the terminals instead of the application side makes it possible for the respective application sides to reduce costs required for authentication.

When the application changes operation depending on the terminal, the application side queries the operating system (OS) of a smartphone or a service provided by the OS to acquire information about the terminal such as a resolution of the screen, and changes the operation in accordance with the acquired information when the communication system is composed of the smartphones, for example. The processing of the query, however, causes the load of the application side to increase.

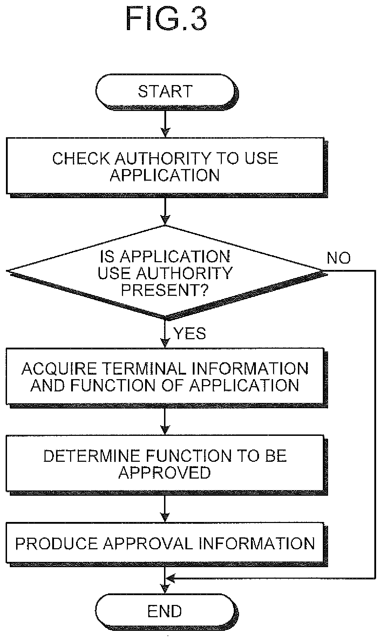

In the embodiment, the authentication and approval method as illustrated in FIG. 3 can be used. FIG. 3 is a flowchart illustrating the method of authentication and approval. When receiving the approval of the access to the application that changes operation depending on the terminal, the management system 50 serving as the access approval system determines not only whether the user has authority to use the application (Yes at the determination of the presence of application use authority) (No at the determination of the presence of application use authority) but also whether the user has authority to execute respective functions of the application, and produces the approval information. This eliminates the need for the application side to perform processing to acquire the information about the terminal and determine the function, which is required for the conventional system.

The information about the terminal 10 necessary for the determination is attainable by being preliminarily stored in the management system 50 or transmitted by the terminal 10 to the management system 50 when the terminal 10 requests authentication from the management system 50. This makes it possible to determine the operation of the application depending on the type of the terminal 10 by only updating the information necessary for determination without changing the implementation of the application.

### <<Hardware structure of embodiment>>

The following describes a hardware structure of the embodiment. The following describes a hardware structure of the terminal 10. The terminal 10 is classified into the teleconference dedicated terminal, the inexpensive teleconference dedicated terminal, which are teleconference dedicated terminals, the mobile phone terminal, and the electronic blackboard, as described above. The following describes an outer appearance of the teleconference dedicated terminal.

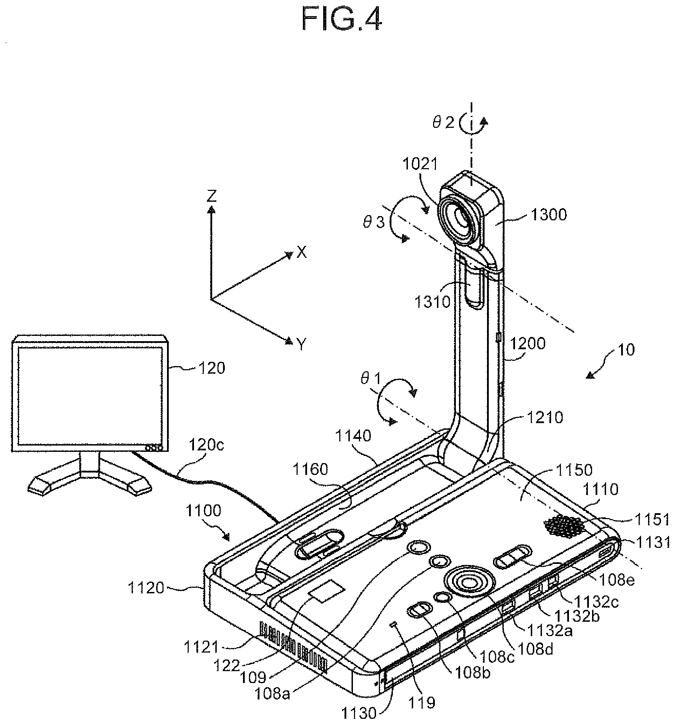

FIG. 4 is an external view of the terminal 10 according to the embodiment. As illustrated in FIG. 4, the terminal 10 serving as the teleconference dedicated terminal includes a housing 1100, an arm 1200, and a camera housing 1300. A front sidewall surface 1110 of the housing 1100 includes an air intake surface (not illustrated) having a plurality of air intake holes. A rear sidewall surface 1120 of the housing 1100 includes an air exhaust surface 1121 having a plurality of air exhaust holes. This makes it possible to take in external air at the rear of the terminal 10 via the air intake surface and to exhaust the taken air toward the rear of the terminal 10 via the air exhaust surface 1121 by driving a cooling fan built in the housing 1100. A right sidewall surface 1130 of the housing 1100 has a sound-collecting hole 1131. The sound-collecting hole 1131 enables a built-in microphone 114, which will be described later, to collect sounds such as voices, other sounds, and noises.

An operation panel 1150 is formed on a side adjacent to the right sidewall surface 1130 of the housing 1100. The operation panel 1150 is provided with a plurality of operation buttons (108a to 108e), a power source switch 109, and an alarm lamp 119, which are described later, and includes a sound output surface 1151 having a plurality of voice output holes that allow output sound from a built-in speaker 115, which will be described later, to pass through. The operation panel 1150 is provided with an authentication receiving I/F 122. The authentication receiving I/F 122 is an interface that receives input of authentication information from the user. Specifically, the authentication receiving I/F 122 is an IC card reader, or a reader of an SD card or a SIM card.

In addition, a housing section 1160 is formed in a recess so as to house therein the arm 1200 and the camera housing 1300, on a side adjacent to a left sidewall surface 1140 of the housing 1100. The right sidewall surface 1130 of the housing 1100 is provided with a plurality of connecting ports (1132a to 1132c) for electrically connecting cables to an external device connection I/F 118, which will be described later. The left sidewall surface 1140 of the housing 1100 is provided with a connecting port (not illustrated) for electrically connecting a cable 120c for the display 120 to the external device connection I/F 118, which will be described later.

In the following description, any operation button in the operation buttons (108a to 108e) is described as the "operation button 108" while any connecting port in the connecting ports (1132a to 1132c) is described as the "connecting port 1132".

The arm 1200 is mounted on the housing 1100 with a torque hinge 1210 such that the arm 1200 is rotatable with respect to the housing 1100 in the up-down direction within a range of a tilt angle θ1 of 135 degrees. FIG. 4 illustrates the state when the tilt angle θ1 is 90 degrees. The camera housing 1300 includes a built-in camera 112, which will be described later. A user, a document, and a room, for example, can be imaged by the camera 112. The camera housing 1300 has a torque hinge 1310. The camera housing 1300 is mounted on the arm 1200 with the torque hinge 1310 interposed therebetween. The camera housing 1300 is mounted on the arm 1200 with the torque hinge 1310 interposed therebetween such that the camera housing 1300 is rotatable with respect to the arm 1200 in the up-down and left-right directions within a range of a pan angle θ2 of ±180 degrees and within a range of a tilt angle θ3 of ±45 degrees, under the assumption that the angle is 0 degrees in the state illustrated in FIG. 4.

The external view illustrated in FIG. 4 is an example. The outer appearance is not limited to this example. Examples of the terminal 10 may include a projection device such as a general purpose PC, a smartphone, a tablet terminal, an electronic blackboard, or a projector, a car navigation terminal mounted in a vehicle, an image forming device such as a multifunction peripheral or a printer, and a wearable terminal. The camera and the microphone are not necessarily built in the terminal 10, and may be provided externally.

The management system 50, the program supply system 90, and the maintenance system 100 have the same outer appearances as the typical servers and computers. The description of their outer appearances is thus omitted. The mobile phone terminal and the electronic blackboard, each of which is the terminal 10, have the same outer appearances as the typical mobile phones and electronic blackboard. The description of their outer appearances is thus omitted.

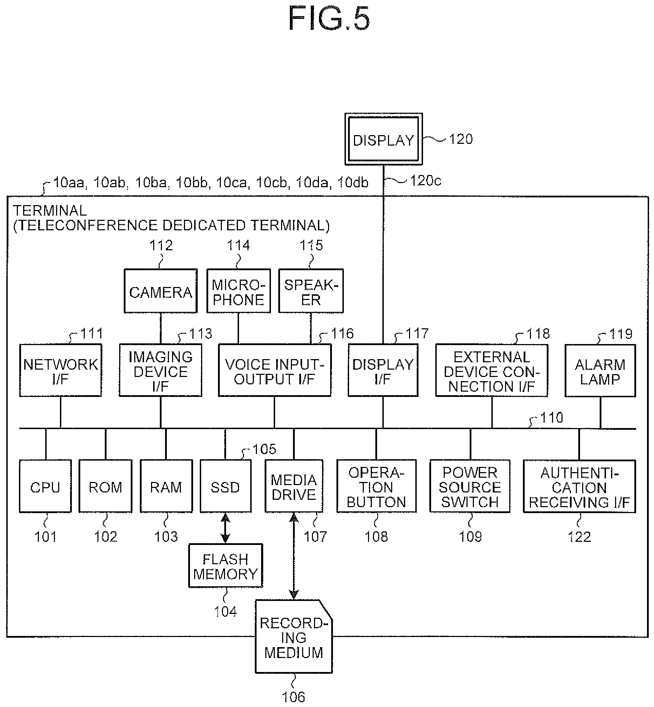

The following describes a hardware structure of the teleconference dedicated terminal as an example of the terminal 10. FIG. 5 is a hardware structure diagram of the terminal 10 according to the embodiment. As illustrated in FIG. 5, the terminal 10 in the embodiment includes a central processing unit (CPU) 101 that controls overall operation of the terminal 10, a read only memory (ROM) 102 that stores therein a computer program used for driving the CPU 101 such as an initial program loader (IPL), a random access memory (RAM) 103 used as a working area of the CPU 101, a flash memory 104 that stores therein various types of data such as a computer program for the terminal 10, the image data, and the sound data, a solid state drive (SSD) 105 that controls reading of various types of data from or writing various types of data into the flash memory 104 under the control of the CPU 101, a media drive 107 that controls reading of data from or writing (storing) of data into a recording medium 106 such as a flash memory, the operation buttons 108 operated when a destination of the terminal 10 is selected, for example, the power source switch 109 that switches on and off of the power source of the terminal 10, and a network interface (I/F) 111 that performs data transmission using the communication network 2.

The terminal 10 further includes the built-in camera 112 that images a subject to acquire the image data under the control of the CPU 101, an imaging device I/F 113 that controls driving of the camera 112, the built-in microphone 114 that receives voices, the built-in speaker 115 that outputs voices, a voice input-output I/F 116 that processes input and output of a voice signal between the microphone 114 and the speaker 115 under the control of the CPU 101, a display I/F 117 that transmits image data to the display 120 externally mounted under the control of the CPU 101, the external device connection I/F 118 that connects various external devices, the alarm lamp 119 that alarms the abnormalities of the various functions of the terminal 10, the authentication receiving I/F 122 described with reference to FIG. 5, and a bus line 110 that electrically connects the above-described components as illustrated in FIG. 5, such as an address bus or a data bus.

The display 120 is a display unit that includes a liquid crystal or organic electroluminescence (EL) by which images of subjects and operations, for example, are displayed. The display 120 is coupled to the display I/F 117 with the cable 120c. The cable 120c may be an analog RGB (VGA) signal cable, a component video cable, a high-definition multimedia interface (HDMI, which is a registered trademark) signal cable, or a digital video interactive (DVI) signal cable.

The camera 112 includes a lens and a solid state imaging device that converts light into charges so as to generate an electrically available image (picture) of a subject. As the solid state imaging device, a complementary metal oxide semiconductor (CMOS) or a charge coupled device (CCD) is used, for example. The camera 112 provided to the teleconference dedicated terminal is a video camera with high definition (HD) image quality.

External devices such as an external camera, an external microphone, and an external speaker can be electrically connected to the external device connection I/F 118 with universal serial bus (USB) cables inserted into the connecting port 1132 of the housing 1100 illustrated in FIG. 4. When an external camera is connected, the external camera is driven prior to the built-in camera 112 under the control of the CPU 101. Likewise, when an external microphone and an external speaker are connected, the external microphone and the external speaker are driven prior to the built-in microphone 114 and the built-in speaker 115 under the control of the CPU 101.

The recording medium 106 is attached to the terminal 10 in a detachable manner. An electrically erasable and programmable ROM (EEPROM) may be used, for example, as a non-volatile memory from which data is read or into which data is written under the control of the CPU 101. The non-volatile memory is not limited to the flash memory 104.

The inexpensive teleconference dedicated terminal has the same hardware structure as the teleconference dedicated terminal. The detailed description thereof is thus omitted. The camera 112 provided to the inexpensive teleconference dedicated terminal is a video camera with standard definition (SD) image quality.

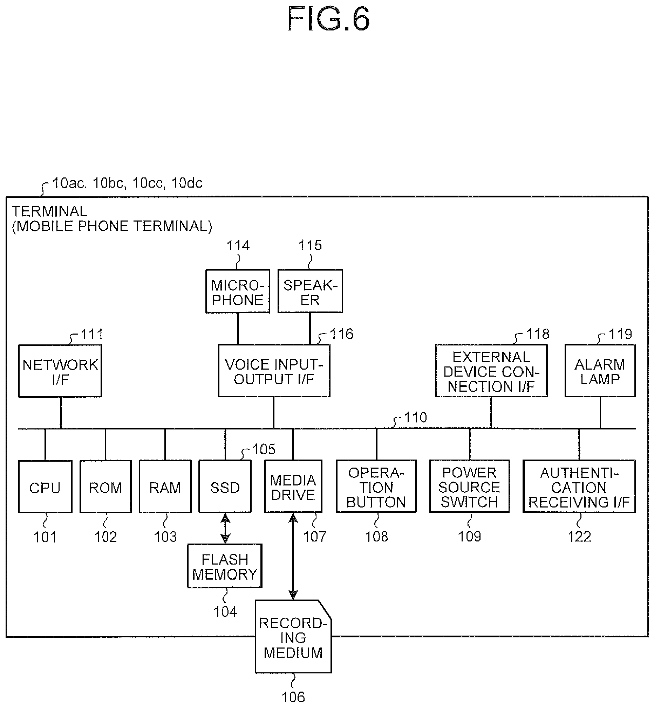

The following describes a hardware structure of the terminal 10 other than the teleconference dedicated terminal in terms of difference from the teleconference dedicated terminal. As illustrated in FIG. 6, the hardware structure of the mobile phone terminal differs from that of the teleconference dedicated terminal in that the mobile phone terminal does not include the camera 112, the imaging device I/F 113, the display I/F 117, or the display 120. FIG. 6 is a hardware structure diagram of the terminal 10 according to the embodiment.

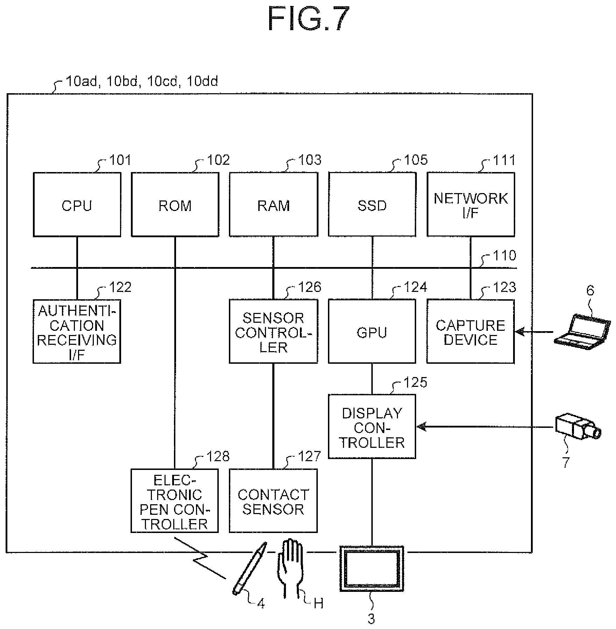

The following describes a hardware structure of the electronic blackboard in the embodiment with reference to FIG. 7. FIG. 7 is a hardware structure diagram of the electronic blackboard. As illustrated in FIG. 7, each of the electronic blackboards, which are the terminal 10ad, 10bd, etc., includes the CPU 101 that controls overall operation of the electronic blackboard, the ROM 102 that stores therein a computer program used for driving the CPU 101 such as an IPL, the RAM 103 used as a working area of the CPU 101, the SSD 105 that stores therein various types of data such as computer programs for the electronic blackboard, and the network I/F 111 that controls communication with the communication network 2. The electronic blackboard further includes the authentication receiving I/F 122 that receives input of the authentication information from the user, a capture device 123 that causes a display of a notebook computer 6 to display picture information as a still image or a moving image, a graphics processing unit (GPU) 124 that specializes in graphics, and a display controller 125 that controls and manages a screen display for outputting the image output from the GPU 124 to a display 3, for example.

Furthermore, the electronic blackboard includes a sensor controller 126 that controls the processing of a contact sensor 127, and the contact sensor 127 that detects the contact of an electronic pen 4 or a hand H of the user on the display 3. The contact sensor 127 inputs coordinates and detects coordinates by an infrared ray cutting off method. In the method for inputting and detecting coordinates, two light emitting-receiving devices disposed at both ends on the upper side of the display 3 emit a plurality of infrared rays in parallel with the display 3, the infrared rays are reflected by a reflector provided around the display 3, and a light receiving element receives light returning on the same optical path as emitted light. The contact sensor 127 outputs identifications (IDs) of infrared rays emitted by the two light emitting-receiving devices cut by an object to the sensor controller 126. The sensor controller 126 identifies the coordinates of the position serving as the contact position of the object. All of the IDs described below are examples of identification information.

The contact sensor 127 is not limited to the infrared ray cutting off method. Various detection units may be employed such as a capacitance touch panel identifying the contact position by detecting a change in an electrostatic capacitance, a resistive touch panel identifying the contact position by detecting a change in a voltage between two opposing resistance films, and an electromagnetic touch panel identifying the contact position by detecting electromagnetic induction generated when an object makes contact with the display unit.

The electronic blackboard further includes an electronic pen controller 128. The electronic pen controller 128 detects the presence or absence of the touch of a pen tip or pen end on the display 3 by communicating with the electronic pen 4. The electronic pen controller 128 may determine the presence or absence of the touch of a portion the user holds of the electronic pen 4 or other portions of the electronic pen besides the pen tip and end of the electronic pen 4. Furthermore, as illustrated in FIG. 7, the electronic blackboard includes a bus line 110 such as an address bus or a data bus for electrically connecting the CPU 101, the ROM 102, the RAM 103, the SSD 105, the network I/F 111, the authentication receiving I/F 122, the capture device 123, the GPU 124, the sensor controller 126, the electronic pen controller 128 to one another.

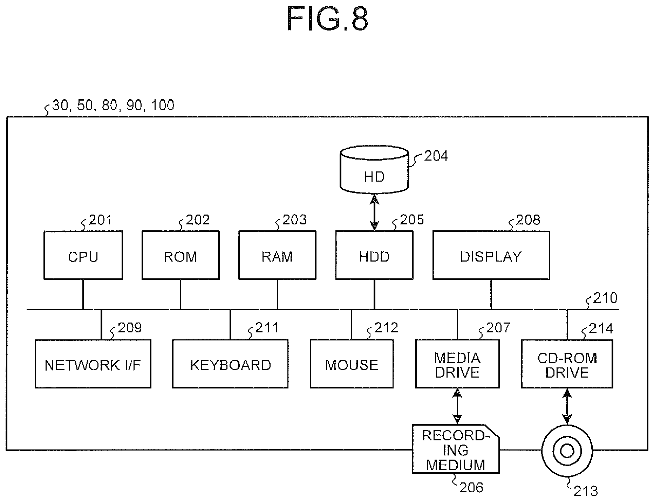

FIG. 8 is a hardware structure diagram of the management system 50, the relaying apparatus 30, the application server 80, the program supply system 90, and the maintenance system 100 according to the embodiment of the invention. The management system 50 includes a CPU 201 that controls the overall operation of the management system 50; a ROM 202 that stores therein a computer program used for driving the CPU 201 such as an IPL, a RAM 203 that is used as a working area of the CPU 201; an HD 204 that stores therein various types of data such as a computer program for the management system 50; a hard disk drive (HDD) 205 that controls reading of various types of data from or writing of various types of data into the HD 204 under control of the CPU 201; a media drive 207 that controls reading data from or writing (storing) data into a recording medium 206 such as a flash memory; a display 208 that displays various types of information such as a cursor, menus, windows, characters, or images, a network I/F 209 that performs data communication using the communication network 2; a keyboard 211 provided with a plurality of keys to input characters, numerical values, and various instructions; a mouse 212 that is used for selecting and executing various instructions, selecting items to be processed, and moving the cursor; a CD-ROM drive 214 that controls reading of various types of data from or writing of various types of data into a compact disc read only memory (CD-ROM) 213 as an example of an attachable-detachable recording medium; and a bus line 210 that electrically connects the above-described components with each other as illustrated in FIG. 8, such as an address bus or a data bus.

The relaying apparatus 30, the application server 80, the program supply system 90, and the maintenance system 100 have the same hardware structure as the management system 50. The description thereof is thus omitted.

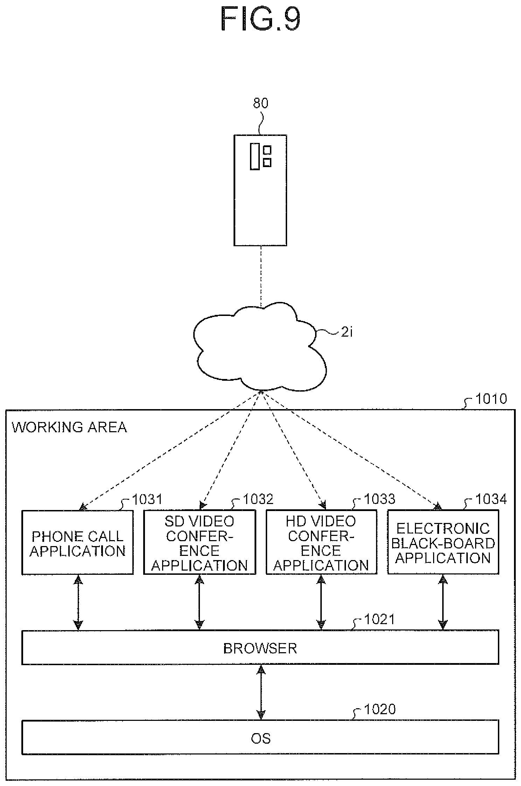

The following describes a software structure of the terminal 10. FIG. 9 is a software structure diagram of the terminal 10. As illustrated in FIG. 9, an OS 1020, a phone call application 1031, a standard definition (SD) video conference application 1032, a high definition (HD) video conference application 1033, and an electronic blackboard application 1034 operate in a working area 1010 in the RAM 103. The OS 1020, which is not limited to a specific OS, is installed in the terminal 10 as the factory default. The phone call application 1031, the SD video conference application 1032, the HD video conference application 1033, and the electronic blackboard application 1034 may be acquired from the application server 80 and installed after factory shipment.

The OS 1020 is basic software that provides a basic function and manages the whole of the terminal 10. A browser 1021, which is software that operates on the OS 1020, is used for displaying information along with a certain purpose such that the information is browsed. The phone call application 1031, the SD video conference application 1032, the HD video conference application 1033, and the electronic blackboard application 1034 are software operating on the OS 1020, and are used for communication with the other terminals 10. In the embodiment of the invention, the phone call application 1031, the SD video conference application 1032, the HD video conference application 1033, and the electronic blackboard application 1034 may be compliant with difference communication protocols.

The phone call application 1031, the SD video conference application 1032, the HD video conference application 1033, and the electronic blackboard application 1034 are examples of the applications. Other applications may be installed. For simple explanation, four types of applications are explained. When a plurality of phone call applications are installed, the phone call applications are compliant with difference communication protocols described above as (1) to (7).

### <<Functional structure of embodiment>>

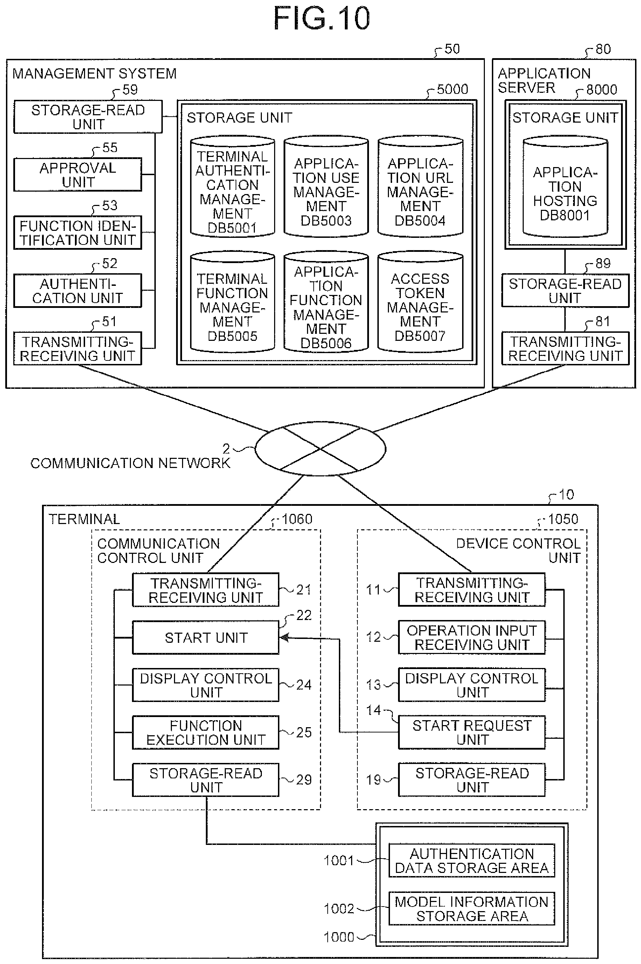

The following describes a functional structure of the embodiment. FIG. 10 is functional block diagrams of the terminal 10, the management system 50, and the application server 80 included in the communication system 1 in the embodiment. In FIG. 10, the terminal 10, the management system 50, and the application server 80 are coupled so as to enable data communication among them via the communication network 2.

### <Functional structure of communication terminal>

The terminal 10 includes a device control unit 1050 and a communication control unit 1060. The device control unit 1050 is achieved upon starting of the OS 1020 and the browser 1021 illustrated in FIG. 9. The communication control unit 1060 is achieved upon starting of any of the phone call application 1031, the SD video conference application 1032, the HD video conference application 1033, and the electronic blackboard application 1034 illustrated in FIG. 9.

The device control unit 1050 includes a transmitting-receiving unit 11, an operation input receiving unit 12, a display control unit 13, a start request unit 14, and a storage-read unit 19. These units are functions that are achieved when some of the components illustrated in FIG. 5 or 6 is operated by a command from the CPU 101 according to the computer program loaded on the RAM 103 from the flash memory 104.

The communication control unit 1060 includes a transmitting-receiving unit 21, a start unit 22, a display control unit 24, a function execution unit 25, and a storage-read unit 29. These units are functions that are achieved when some of the components illustrated in FIG. 5 or 6 is operated by a command from the CPU 101 according to the phone call application (computer program) loaded on the RAM 103 from the flash memory 104.

The terminal 10 includes a storage unit 1000 structured by the ROM 102, the RAM 103, and the flash memory 104 that are illustrated in FIG. 5 or 6.

### (Authentication data storage area)

The storage unit 1000 of the terminal 10 includes an authentication data storage area 1001 that stores therein the authentication information used for authenticating a login request origin when the terminal 10 makes a login request to the management system 50. In the embodiment of the invention, the authentication data storage area 1001 of the terminal 10 stores therein certificate information and any password. This enables the terminal 10 to use client certificate authentication and password authentication optionally. The authentication data may be stored in a subscriber identity module (SIM) card, a memory, or the like and received by the authentication receiving I/F 122, and may be stored in the authentication data storage area 1001 by the storage-read unit 19.

### (Model information storage area)

The storage unit 1000 of the terminal 10 includes a model information storage area 1002 that stores therein model information that indicates a model of the terminal 10. In the embodiment of the invention, the model information storage area 1002 of each of the terminals (10aa, 10ba, etc.) stores therein model information "A" indicating that the terminal is the teleconference dedicated terminal. The model information storage area 1002 of each of the terminals (10ab, 10bb, etc.) stores therein model information "B" indicating that the terminal is the inexpensive teleconference dedicated terminal. The model information storage area 1002 of each of the terminals (10ac, 10bc, etc.) stores therein model information "C" indicating that the terminal is the mobile phone terminal. The model information storage area 1002 of each of the terminals (10ad, 10bd, etc.) stores therein model information "D" indicating that the terminal is the electronic blackboard.

### (Each functional structure of device control unit)

The following describes each functional structure of the device control unit 1050 of the terminal 10 in detail with reference to FIG. 10. In the following description of each functional structure of the device control unit 1050 of the terminal 10, a relation is also described between each functional structure of the device control unit 1050 and major components that achieve each functional structure of the device control unit 1050 in the components illustrated in FIGS. 5 to 7.

The transmitting-receiving unit 11 of the terminal 10 illustrated in FIG. 10 is achieved by a command from the CPU 101 illustrated in FIGS. 5 to 7 and the network I/F 111. The transmitting-receiving unit 11 transmits and receives various types of data (or information) between itself and the terminal on the opposite side, each apparatus, or the system via the communication network 2.

The operation input receiving unit 12 is achieved by a command from the CPU 101 illustrated in FIGS. 5 to 7, and the operation buttons (108a, 108b, 108c, 108d, and 108e) and the power source switch 109 illustrated in FIG. 4. The operation input receiving unit 12 receives various types of input or various selections from a user. For example, once the user turns on the power source switch 109 illustrated in FIG. 4, the operation input receiving unit 12 illustrated in FIG. 10 receives the power source on operation and causes the power source to be turned on.

The display control unit 13 is achieved by a command from the CPU 101 illustrated in FIGS. 5 to 7, and the display I/F 117. The display control unit 13 performs control such that image data sent from the opposite side in communication is transmitted to the display 120.

The start request unit 14 is achieved by a command from the CPU 101 illustrated in FIGS. 5 to 7, and the browser 1021. The start request unit 14 requests the communication control unit 1060 to start the applications (1031, 1032, 1033, and 1034).

The storage-read unit 19 is executed by a command from the CPU 101 illustrated in FIGS. 5 to 7 and the SSD 105, or achieved by a command from the CPU 101. The storage-read unit 19 stores various types of data in the storage unit 1000 or reads various types of data stored in the storage unit 1000.

### (Each functional structure of communication control unit)

The following describes each functional structure of the communication control unit 1060 of the terminal 10 in detail with reference to FIGS. 5 to 7 and FIG. 10. In the following description of each functional structure of the communication control unit 1060 of the terminal 10, a relation is also described between each functional structure of the communication control unit 1060 and major components that achieve each functional structure of the communication control unit 1060 in the components illustrated in FIGS. 5 to 7.

The transmitting-receiving unit 21 illustrated in FIG. 10 is achieved by a command from the CPU 101 illustrated in FIGS. 5 to 7 and the network I/F 111. The transmitting-receiving unit 21 transmits and receives various types of data (or information) between itself and the terminal on the opposite side, each apparatus, or the system via the communication network 2.

The start unit 22 is achieved by a command from the CPU 101 illustrated in FIGS. 5 to 7. When the operation input receiving unit 12 of the device control unit 1050 receives an application selection by the user, the start unit 22 starts operation of the communication control unit 1060 (phone call application) based on a start request from the operation input receiving unit 12.

The display control unit 24 is achieved by a command from the CPU 101 illustrated in FIGS. 5 to 7, and the display I/F 117. The display control unit 24 performs control such that data of a screen is transmitted to the display 120.

The function execution unit 25 is achieved by a command from the CPU 101 illustrated in FIGS. 5 to 7 and the camera 112, the microphone 114, or the speaker 115. The function execution unit 25 performs control to achieve communication using, for example, images and sounds.

The storage-read unit 29 is executed by a command from the CPU 101 illustrated in FIGS. 5 to 7 and the SSD 105, or achieved by a command from the CPU 101. The storage-read unit 29 stores various types of data in the storage unit 1000 or reads various types of data stored in the storage unit 1000.

### <Functional structure of management system>

The management system 50 includes a transmitting-receiving unit 51, an authentication unit 52, a function identification unit 53, an approval unit 55, and a storage-read unit 59. These units are functions or units that are achieved when some of the components illustrated in FIG. 8 is operated by a command from the CPU 201 according to the computer program for the management system 50 loaded on the RAM 203 from the HD 204. The management system 50 includes a storage unit 5000 structured by the HD 204 illustrated in FIG. 8. In the storage unit 5000, DBs (5001,5003, 5004, 5005, 5006, and 5007) including respective tables described below are structured.

### (Terminal authentication management table)

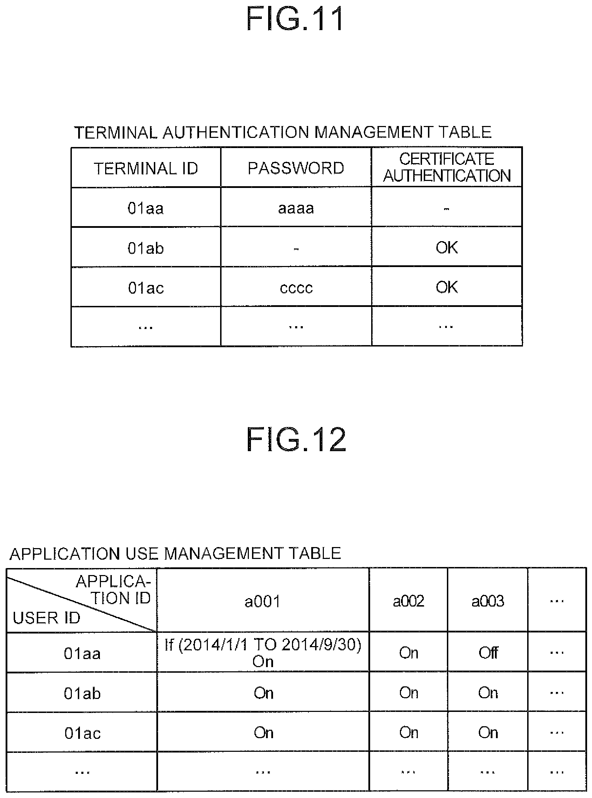

FIG. 11 is a conceptual diagram illustrating a terminal authentication management table. In the storage unit 5000, a terminal authentication management DB 5001 including the terminal authentication management table illustrated in FIG. 11 is structured. In the terminal authentication management table, the password for authentication and information that indicates permission or rejection of the client certificate authentication are managed in association with each of the terminal IDs of all of the terminals 10 managed by the management system 50. For example, the terminal authentication management table illustrated in FIG. 11 indicates that the terminal 10aa having a terminal ID "01aa" can use the password authentication and the password for the authentication is "aaaa". In the terminal authentication management table, it is indicated that the terminal 10ab having a terminal ID "01ab" can use the client certificate authentication. Furthermore, in the terminal authentication management table, it is indicated that the terminal 10ac having a terminal ID "01ac" can use the password authentication and the client certificate authentication, and the password for the password authentication is "cccc". By limiting the available authentication method for each terminal 10, the available authentication method can be limited for all of the available applications for each terminal 10. In the embodiment, any information that can identify the terminal 10 serving as the communication destination may be used for the terminal ID. The information may be information that is not unique to the terminal 10 besides the information unique to the terminal 10. For example, the information may be information that identifies the user of the terminal 10. For another example, the information may be identification information stored in a recording medium from which the terminal 10 can read the identification information.

### (Application use management table)

FIG. 12 is a conceptual diagram illustrating an application use management table. In the storage unit 5000, an application use management DB 5003 including the application use management table illustrated in FIG. 12 is structured. In the application use management table, availability information indicating whether the application is available or unavailable is managed in association with each terminal ID identifying the terminal 10 and for each application ID identifying the application for teleconference. In the availability information column, "on" indicates that the application is available while "off" indicates that the application is unavailable.

Furthermore, an available condition under which the application is available can be added to the application use management table to manage the application. For example, in the application use management table illustrated in FIG. 12, it is indicated that the phone call application identified by an application ID "a001" and the SD video conference application identified by an application ID "a002" are available, and the HD video conference application identified by an application ID "a003" is unavailable in the terminal 10aa having a terminal ID "01aa". In this case, an available period of the phone call application is from "January 1st, 2014" to "September 30th, 2014".

### (Application URL management table)

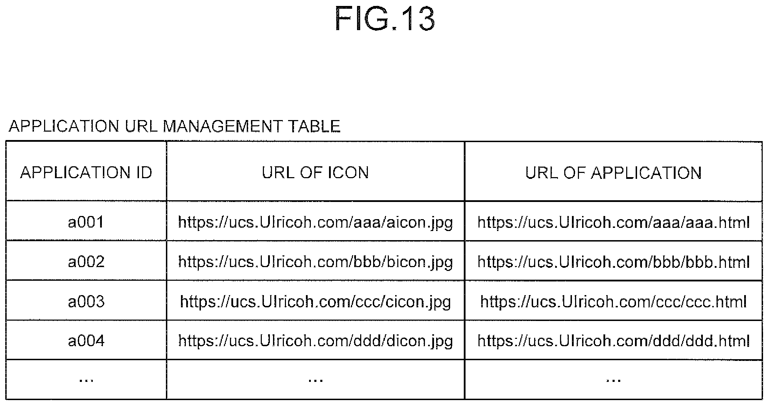

FIG. 13 is a conceptual diagram illustrating an application URL management table. In the storage unit 5000, an application URL management DB 5004 including the application URL management table illustrated in FIG. 13 is structured. In the application URL management table, URL information about icon data of the application in the communication network 2 and the URL information about the application in the communication network 2 are managed in association with each of a plurality of application IDs.

### (Terminal function management table)

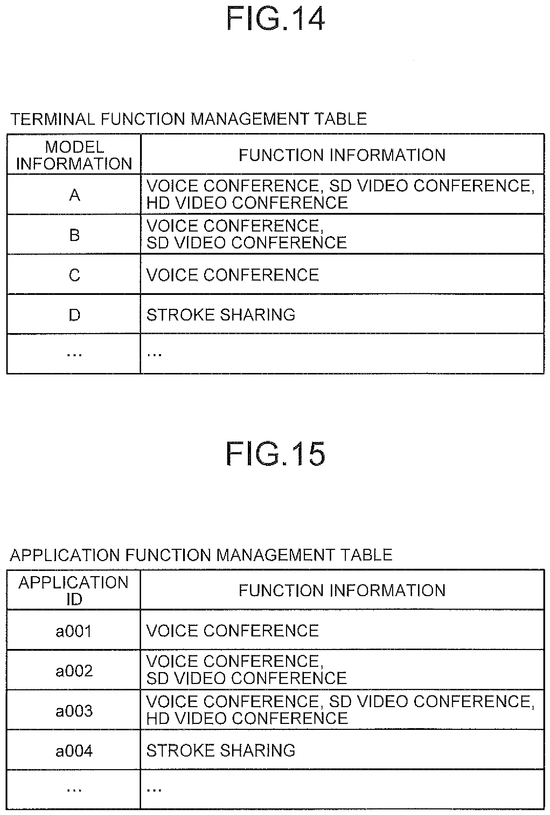

FIG. 14 is a conceptual diagram illustrating a terminal function management table. In the storage unit 5000, a terminal function management DB 5005 including the terminal function management table as illustrated in FIG. 14 is structured. In the terminal function management table, function information that indicates a function available in the terminal 10 of the model of the application is managed in association with each model information indicating the model of the terminal 10. The embodiment of the invention may allow the model information about the terminal to be classified in accordance with a device provided to the terminal 10. For example, the terminal 10 provided with an external device such as a microphone or a speaker may be managed as a different model from the terminal 10 before attachment of the external device. In the terminal function management table illustrated in FIG. 14, the model information "A" indicates the teleconference dedicated terminal, the model information "B" indicates the inexpensive teleconference dedicated terminal, the model information "C" indicates the mobile phone terminal, and the model information "D" indicates the electronic blackboard.

### (Application function management table)

FIG. 15 is a conceptual diagram illustrating an application function management table. In the storage unit 5000, an application function management DB 5006 including the application function management table as illustrated in FIG. 15 is structured. In the application function management table, one or more pieces of function information each indicating the function provided by the application are managed in association with each application ID of the applications managed by the management system 50. In the application function management table as illustrated in FIG. 15, the application ID "a001" is the application ID of the phone call application 1031, the application ID "a002" is the application ID of the SD video conference application 1032, the application ID "a003" is the application ID of the HD video conference application 1033, and the application ID "a004" is the application ID of the electronic blackboard application 1034.

### (Access token management table)

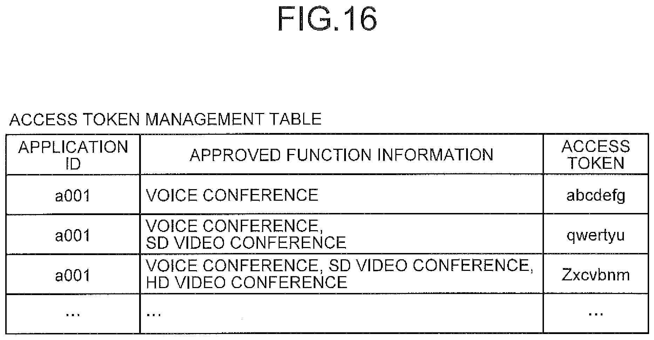

FIG. 16 is a conceptual diagram illustrating an access token management table. In the storage unit 5000, an access token management DB 5007 including the access token management table as illustrated in FIG. 16 is structured. In the access token management table, the access token serving as approval information indicating that the access to the application is approved is managed in association with each application ID identifying the application, and the function information indicating the function approved to be used in the terminal 10 out of the functions provided by the application. For example, in the access token management table illustrated in FIG. 16, it is indicated that the access token "abcdefg" is issued as the approval information when the use of the function of "voice conference" is approved out of the functions provided by the phone call application identified by the application ID "a001".

### (Each functional structure of management system)

The following describes each functional structure of the management system 50 in detail. In the following description of each functional structure of the management system 50, a relation is also described between each functional structure of the management system 50 and major components that achieve each functional structure of the management system 50 among the components illustrated in FIG. 8.

The transmitting-receiving unit 51 is executed by a command from the CPU 201 illustrated in FIG. 8 and the network I/F 209 illustrated in FIG. 8. The transmitting-receiving unit 51 transmits and receives various types of data (or information) between itself and each terminal, each apparatus, or the system via the communication network 2.

The authentication unit 52 is achieved by a command from the CPU 201 illustrated in FIG. 8. The authentication unit 52 searches the terminal authentication management table (refer to FIG. 11) using the terminal ID and the password that are received by the transmitting-receiving unit 51 as searching keys, and performs terminal authentication by determining whether the same terminal ID and password are managed in the terminal authentication management table.

The function identification unit 53 is achieved by a command from the CPU 201 illustrated in FIG. 8. The function identification unit 53 searches the terminal function management table (refer to FIG. 14) using the model information transmitted from the terminal 10 serving as the application start request origin as the searching key, extracts the corresponding function information, and specifies the function available in the terminal 10.

The approval unit 55 is achieved by a command from the CPU 201 illustrated in FIG. 8. The approval unit 55 produces the access token as the approval information indicating that the use of the function provided by the application is approved.

The storage-read unit 59 is executed by a command from the CPU 201 illustrated in FIG. 8 and the HDD 205 illustrated in FIG. 8, or achieved by a command from the CPU 201. The storage-read unit 59 stores various types of data in the storage unit 5000 or extracts various types of data stored in the storage unit 5000.

### <Functional structure of application server>

The application server 80 includes a transmitting-receiving unit 81 and a storage-read unit 89. These units are functions or units that are achieved when some of the components illustrated in FIG. 8 is operated by a command from the CPU 201 according to the computer program for the application server 80 loaded on the RAM 203 from the HD 204. The application server 80 includes a storage unit 8000 structured by the HD 204 illustrated in FIG. 8.

### (Application hosting DB)

In the storage unit 8000, an application hosting DB 8001 is structured. The application hosting DB 8001 stores therein the application uploaded in the application server 80 to manage it.

The storage unit 8000 of the application server 80 stores therein a table in which the same information as the access token management table illustrated in FIG. 16 is described. This table makes it possible for the application side to know not only whether the access from the terminal 10 is approved but also what function is approved to be used in the terminal 10 of the application, when the application server receives the access token from the terminal 10. The application hosting DB 8001 of the application server 80 may store therein a plurality of applications. In this case, each application may have information necessary for the application out of the pieces of information described in the access token management table illustrated in FIG. 16. A plurality of application servers 80 may be provided. In this case, each application server 80 may have information necessary for the application managed by the application server 80 out of the pieces of information described in the access token management table illustrated in FIG. 16.

The transmitting-receiving unit 81 is executed by a command from the CPU 201 illustrated in FIG. 8 and the network I/F 209 illustrated in FIG. 8. The transmitting-receiving unit 81 transmits and receives various types of data (or information) between itself and each terminal, each apparatus, or the system via the communication network 2.

The storage-read unit 89 is executed by a command from the CPU 201 illustrated in FIG. 8 and the HDD 205 illustrated in FIG. 8, or achieved by a command from the CPU 201. The storage-read unit 89 stores various applications in the storage unit 8000 or extracts various applications stored in the storage unit 8000.

### <<Processing or operation of the embodiment>>

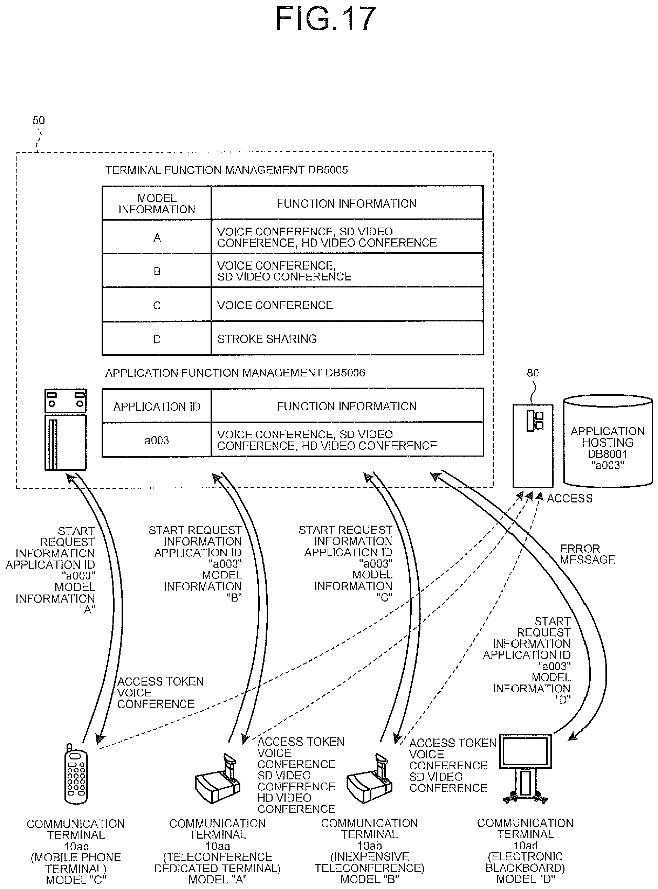

The following describes an outline of the processing or the operation in the embodiment with reference to FIG. 17. FIG. 17 is a conceptual diagram illustrating a state of transmitting and receiving of various types of information in the communication system 1.

The management system 50 (an example of the access management system) manages the access from the terminal 10 to the application registered in the application server 80 via the communication network 2. The application can provide different functions depending on the model of the terminal 10. The function identification unit 53 (an example of the function identification unit) of the management system 50 identifies the function available in the terminal 10 serving as the access origin out of the functions that can be provided by the application based on the model of the terminal 10 serving as the application start request origin (the terminal serving as the access origin). The transmitting-receiving unit 51 (an example of the control unit) performs control such that the function information is transmitted to the application server 80 when the terminal 10 serving as the access origin accesses the application, by transmitting the access token including the function information indicating the function identified by the function identification unit 53 to the terminal 10 serving as the access origin. This makes it possible for the application server 80 serving as the access destination to know the function available in the terminal 10 without querying the terminal 10 when the terminal 10 accesses the application. This makes it possible to reduce the load of the access destination.

The terminal function management DB 5005 (an example of the communication terminal function management unit) of the management system 50 manages the model information indicating the model of the terminal 10 and the function information indicating the function available in the terminal 10 of the model of the application in association with each other. The transmitting-receiving unit 51 (an example of the model information receiving unit) of the management system 50 receives start request information including the model information indicating the model of the terminal 10 serving as the origin of the access to the application. This enables the function identification unit 53 to identify the function available in the terminal 10 serving as the access origin based on the function information managed in the terminal function management DB 5005 in association with the model information included in the start request information received by the transmitting-receiving unit 51.

The transmitting-receiving unit 51 (function information receiving unit) of the management system 50 may receive, from the terminal 10, the function information indicating the function available in the terminal 10. This makes it possible for the function identification unit 53 to identify the function available in the terminal 10 serving as the access origin based on the function information transmitted from the terminal 10 even when the management system 50 does not include the terminal function management DB 5005.

The application function management DB 5006 of the management system 50 (an example of the application function management unit) manages the function information indicating the function provided by the application in association with the application ID of the application for each application ID. This enables the function identification unit 53 to identify the function information indicating the function available in the terminal 10 serving as the access origin out of the function information managed in the application function management DB 5006.

The application URL management DB 5004 (an example of the position information management unit) of the management system 50 manages the uniform resource locator (URL, which is an example of position information) that indicates the position of the application serving as the destination of the access from the terminal 10 in the communication network 2. The transmitting-receiving unit 51 transmits, to the terminal 10 serving as the access origin, the access token (an example of the approval information) that includes the URL of the application serving as the access destination managed in the application URL management DB 5004 and the function information indicating the function identified by the function identification unit 53, and indicates the authority to use the function identified by the function identification unit in the terminal 10. This enables the terminal 10 serving as the access origin to access the application using the access token and transmit the function available in the terminal 10 to the application.

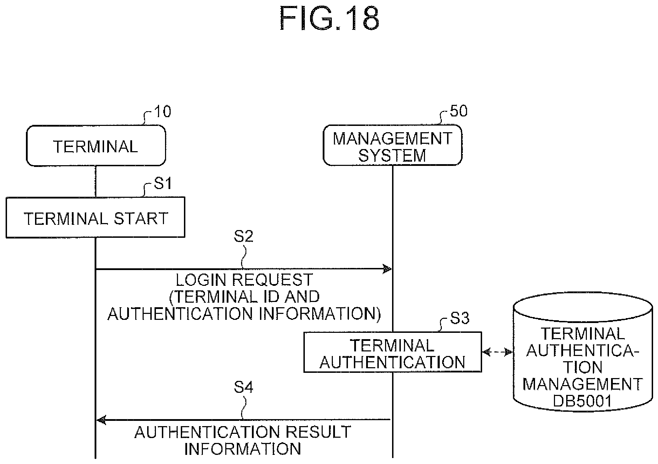

The following describes the processing or the operation in the embodiment in detail. With reference to FIG. 18, the processing at a preparatory stage in the terminal 10 for starting communication is described. FIG. 18 is a sequence diagram illustrating the processing at a preparatory stage for starting communication. Once a user turns on the power source switch 109 illustrated in FIG. 4, the operation input receiving unit 12 illustrated in FIG. 10 receives the power source on and causes the terminal 10 to start (step S1). Once the power source on is received, the transmitting-receiving unit 11 makes a login request to the management system 50 via the communication network 2 (step S2). The transmitting-receiving unit 51 of the management system 50 receives the login request. The login request may be made once the user of the terminal 10 serving as the login request origin inputs the instruction.

The login request includes the terminal ID to identify the terminal 10 serving as the login request origin, and the authentication information to authenticate the login request origin. Examples of the authentication information include the password and the client certificate information. The terminal ID and the authentication information may be read from the storage unit 1000 via the storage-read unit 19 and transmitted to the transmitting-receiving unit 11 as data, or received by the authentication receiving I/F 122 as input data. The terminal ID and the password may be input by the user of the terminal 10 serving as the login request origin. When the login request information is transmitted to the management system 50 from the terminal 10, the management system 50 serving as the receiving side can acquire the IP address of the terminal 10 serving as the transmission side.

The authentication unit 52 of the management system 50 authenticates the terminal 10 serving as the login request origin based on the terminal ID and the authentication information included in the login request information received via the transmitting-receiving unit 51 (step S3). In this case, when the terminal 10 requests the password authentication, the authentication unit 52 searches the terminal authentication management table (refer to FIG. 11) in the storage unit 5000 using the password transmitted from the terminal 10 as the searching key, and performs the terminal authentication by determining whether the same terminal ID and password are managed in the terminal authentication management table. When the terminal 10 requests the client certificate authentication, the authentication unit 52 searches the terminal authentication management table (refer to FIG. 11) in the storage unit 5000 using the terminal ID transmitted from the terminal 10 as the searching key, and refers to the terminal authentication management table to check whether the client certificate authentication of the terminal 10 is permitted. When the client certificate authentication is permitted, the terminal authentication is performed by determining whether client certificate information transmitted from the terminal 10 is valid.

The transmitting-receiving unit 51 of the management system 50 transmits authentication result information indicating the authentication result obtained by the authentication unit 52 to the terminal 10 serving as the login request origin via the communication network 2 (step S4). The transmitting-receiving unit 11 of the terminal 10 serving as the login request origin, thus, receives the authentication result information. The following describes a case where the terminal authentication unit 52 determines that the terminal 10 is the terminal having valid use authority.

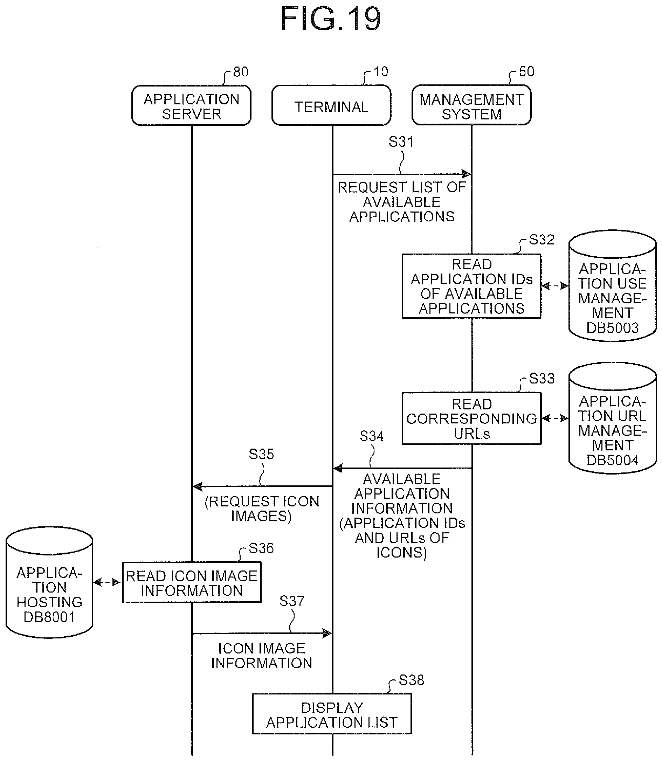

With reference to FIG. 19, the following describes the processing up to the step at which application icons indicating candidates of application requested to be started are displayed in the terminal 10. FIG. 19 is a sequence diagram illustrating the processing up to the step at which the application icons are displayed.

After the terminal 10 completes the processing from step S1 to step S4 and logs in the management system 50, the transmitting-receiving unit 11 of the terminal 10 requests a list of available application candidates to the management system 50 via the communication network 2 (step S31). The transmitting-receiving unit 51 of the management system 50 receives the request of available applications. The request includes the terminal ID of the terminal 10 serving as the list request origin.

The storage-read unit 59 of the management system 50 searches the application use management table (refer to FIG. 12) using the terminal ID of the terminal 10 serving as the list request origin received at step S31 as the searching key to read the application IDs corresponding to the terminal ID and the use condition (the start date of the available period and the end date of the available period) (step S32). When the use condition is set for some of the application IDs read at step S32, the storage-read unit 59 extracts the application IDs that are within the available period (a period from the start data to the end data of the available period) at the time at which the processing is performed, and searches the application URL management table (refer to FIG. 13) using the extracted application IDs as the searching keys to read the URL information about the icons corresponding to the application IDs (step S33).

The management system 50 transmits available application information to the terminal 10 serving as the list request origin via the communication network 2 as the list of available application candidates (step S34). The available application information includes the application IDs and the URL information about the icons read at step S33. The transmitting-receiving unit 11 of the terminal 10 serving as the list request origin, thus, receives the available application information.

The transmitting-receiving unit 11 of the terminal 10 accesses the resources indicated by the URLs of the icons received at step S34 in the application hosting DB 8001 and makes a request to acquire image information about the icons (step S35). The transmitting-receiving unit 81 of the application server 80 receives the request to acquire the image information about the icons.

The storage-read unit 89 of the application server 80 reads the image information about the icons requested at step S35 from the application hosting DB 8001 in the storage unit 8000 (step S36). The transmitting-receiving unit 81 transmits the image information about the icons to the terminal 10 serving as the acquisition request origin via the communication network 2 (step S37). The transmitting-receiving unit 11 of the terminal 10 serving as the request origin, thus, receives the image information about the icons.

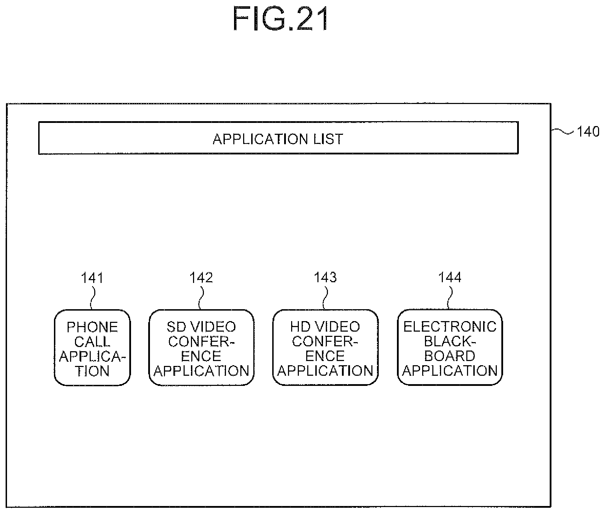

The display control unit 13 causes the display 120 to display an "application list" screen 140 as illustrated in FIG. 21 (step S38). FIG. 21 is a schematic diagram illustrating an exemplary screen of the application list. In the screen 140, icons of application in the available period are displayed. In this example, four icons (141, 142, 143, and 144) of the applications indicated by the respective application IDs (a001, a002, a003, and a004) are displayed.

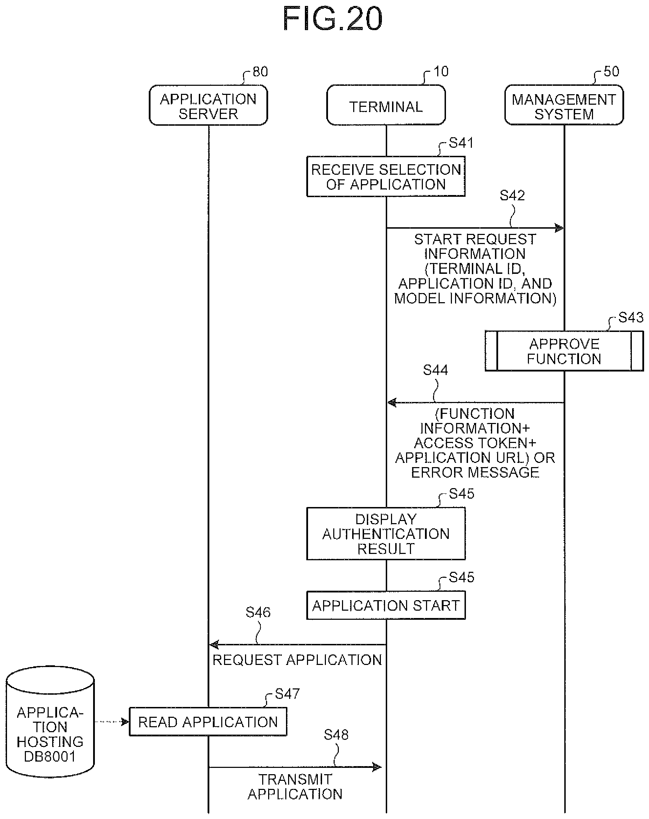

With reference to FIG. 20, the following describes the processing to select the application icon indicating a desired application from the list of the applications to make a request to start the selected application. FIG. 20 is a sequence diagram illustrating the processing to make a request to start the application.

When a desired icon is selected from the icons illustrated in FIG. 21 by the user's operation, the operation input receiving unit 12 of the terminal 10 receives the selection of the application icon by the user (step S41). The transmitting-receiving unit 11 of the terminal 10 transmits, to the management system 50 via the communication network 2, the start request information indicating the request to start the selected application (step S42). The start request information includes the terminal ID of the terminal 10 serving as the start request origin, the application ID of the selected application, and the model information indicating the model of the terminal serving as the start request origin. The model information is stored in the model information storage area 1002 of the terminal 10 serving as the start request origin, and read by the storage-read unit 19, and transmitted to the management system 50 by the transmitting-receiving unit 11.

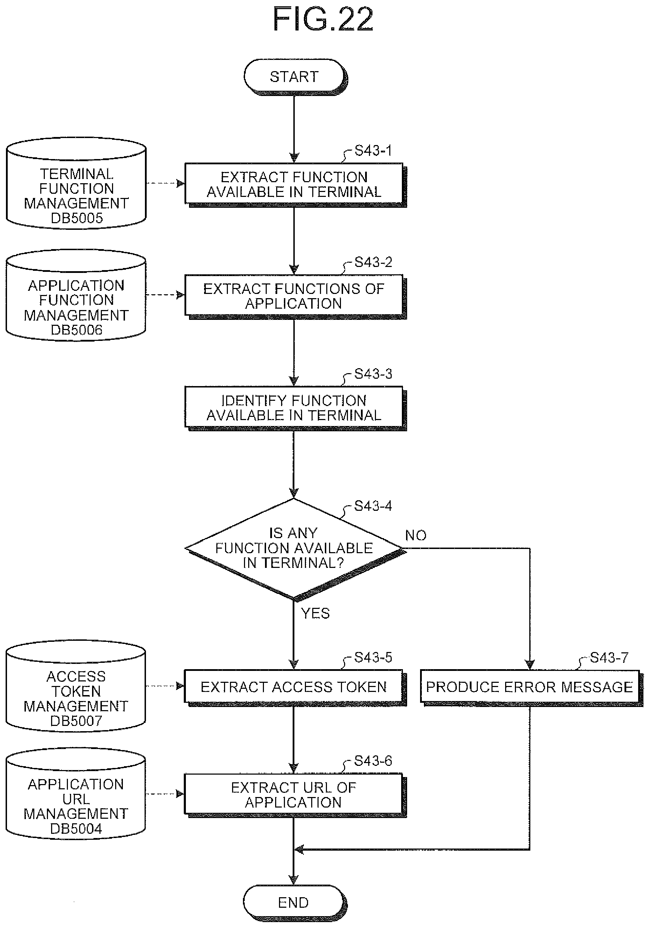

The transmitting-receiving unit 51 of the management system 50 receives the start request by receiving the start request information. Once the start request is received, the approval unit 55 of the management system 50 produces the access token indicating that the use of the function depending on the model of the terminal 10 serving as the start request origin is approved out of the functions provided by the application requested to be started (step S43). The following describes the processing at step S43 in detail with reference to FIG. 22. FIG. 22 is a flowchart illustrating the processing in which the use of the application is approved.

The function identification unit 53 of the management system 50 searches the terminal function management table (refer to FIG. 14) using the model information transmitted from the terminal 10 serving as the start request origin as the searching key, and extracts the corresponding pieces of function information, thereby identifying the functions available in the terminal 10 (step S43-1). The function identification unit 53 searches the application function management table (refer to FIG. 15) using the application ID of the application requested to be started as the searching key, and extracts the corresponding pieces of function information, thereby identifying the functions that can be provided by the application (step S43-2).

The function identification unit 53 identifies, as the function information indicating the function available in the terminal 10 out of the functions provided by the application requested to be started, the function information that is matched with the function information in the respective pieces of function information extracted at step S43-1 out of the respective pieces of information about the application extracted at step S43-2 (step S43-3).

The approval unit 55 determines whether any function is identified as the function available in the terminal 10 by the processing at step S43-3 (step S43-4). If any function available in the terminal 10 is identified (Yes at step S43-4), the approval unit 55 searches the access token management table (refer to FIG. 16) using the application ID of the application requested to be stated and the function information identified at step S43-3 as the searching keys to extract the corresponding access token (step S43-5). In the embodiment, the access token extracted at step S43-5 is used for the approval information indicating that the use of the function identified at step S43-3 in the terminal 10 serving as the start request origin is approved. The approval unit 55 searches the application URL management table (refer to FIG. 13) using the application ID of the application requested to be started as the searching key, extracts the URL information about the corresponding application (step S43-6) .

If no function is identified as the function available in the terminal 10 by the processing at step S43-3 (No at step S43-4), the approval unit 55 produces an error message indicating that the terminal 10 serving as the start request origin cannot access the application (step S43-7).

The transmitting-receiving unit 51 of the management system 50 transmits, to the terminal 10 serving as the start request origin, the function information identified at step S43-3, the access token extracted at step S43-5, and the URL of the application serving as the access destination extracted at step S43-6, or the error message produced at step S43-7 (step S44).

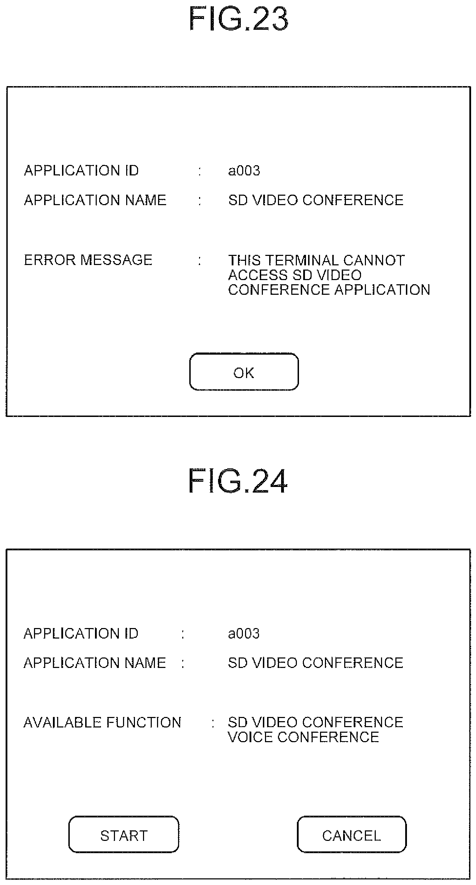

When the transmitting-receiving unit 11 of the terminal 10 receives the error message, the display control unit 13 causes the display 120 to display the application ID of the application requested to be started, the name of the application, the error message, for example, and then the processing ends (Step S45-1). FIG. 23 is a conceptual diagram illustrating an exemplary display screen on the display.

When the transmitting-receiving unit 11 of the terminal 10 receives the access token, the display control unit 13 causes the display 120 to display the application ID of the application requested to be started, the name of the application, the function indicated by the function information transmitted from the management system 50, and a button that receives a request to start the application, based on the access token included in the approval information. FIG. 24 is a conceptual diagram illustrating another exemplary display screen on the display.

When the "start" button is selected in the display screen illustrated in FIG. 24 by the user's operation on the operation button 108, the start request unit 14 of the device control unit 1050 illustrated in FIG. 10 orders the start unit 22 of the communication control unit 1060 to start the communication control unit 1060, and the communication control unit 1060 starts (Step S45-2). The application selected by the user, thus, starts. The processing described above is performed by the device control unit 1050. The following processing is performed by the communication control unit 1060.

Once the application starts, the transmitting-receiving unit 21 transmits, to the application server 80, the access token transmitted at step S44, and accesses the URL of the application included in start permission or rejection information to make a request to download the application (step S46). When the transmitting-receiving unit 81 of the application server 80 receives the request to download the application, the storage-read unit 89 reads the application identified by the URL (step S47). The read application is transmitted by the transmitting-receiving unit 81 to the terminal 10 serving as the origin of the request to download the application (step S48). This enables the application to operate on the browser 1021 in the terminal 10 serving as the start request origin. The access token transmitted to the application server 80 includes not only the information indicating the application approved to be accessed from the terminal 10 but also the information indicating the function available in the terminal 10 serving as the start request origin out of the functions provided by the application. This makes it possible for the application side to identify the function available in the terminal 10 without querying the model information about the terminal 10 serving as the start request origin, thereby reducing the load of the application side.

### [Second embodiment]

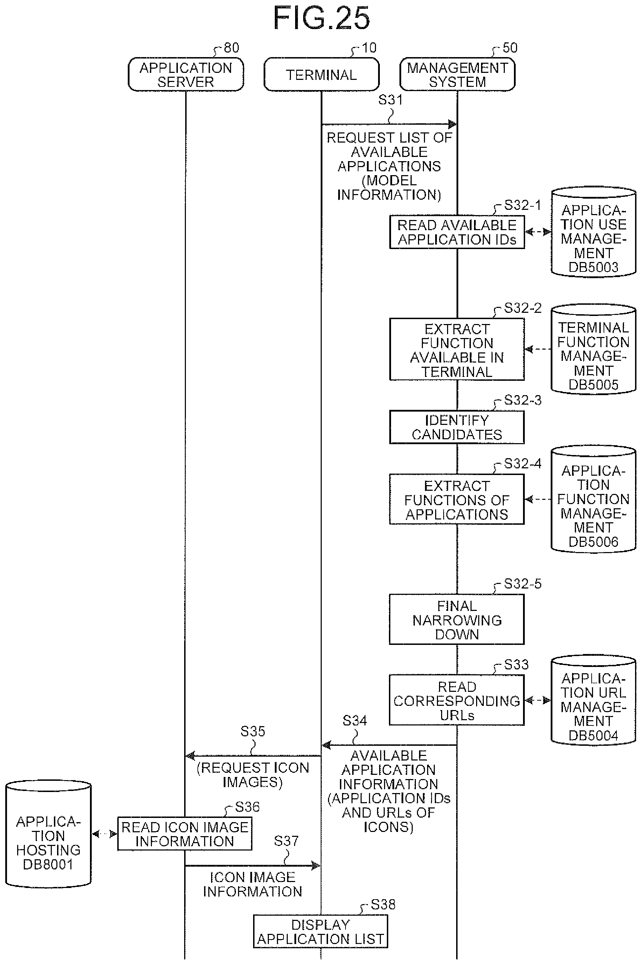

The following describes a second embodiment in terms of difference from the first embodiment. FIG. 25 is a sequence diagram illustrating the processing up to the step at which the application icons are displayed. In the second embodiment, at step S31, when requesting the list of available application candidates from the management system 50, the transmitting-receiving unit 11 of the terminal 10 transmits the model information about the terminal 10 serving as the list request origin. The model information is stored in the model information storage area 1002 of the terminal 10 serving as the list request origin, and read by the storage-read unit 19, and transmitted to the management system 50 by the transmitting-receiving unit 11.

In the second embodiment, the processing at step S32 in the first embodiment is changed to the processing from step S32-1 to step S32-4 illustrated in FIG. 25.

The storage-read unit 59 of the management system 50 searches the application use management table (refer to FIG. 12) using the terminal ID of the terminal 10 serving as the list request origin received at step S31 as the searching key, and reads the application IDs corresponding to the terminal ID and the use condition (the start date of the available period and the end date of the available period) (step S32-1). The storage-read unit 59 identifies the candidates of the application to be included in the list by removing the application IDs of the applications that are not within the available period at the time at which the processing is performed out of the read application IDs (step S32-2).

The function identification unit 53 of the management system 50 searches the terminal function management table (refer to FIG. 14) using the model information transmitted from the terminal 10 at step S31 as the searching key, and extracts the corresponding pieces of function information, thereby identifying the functions available in the terminal 10 (step S32-3). The function identification unit 53 searches the application function management table (refer to FIG. 15) using the application IDs of the respective applications of the candidates identified at step S32-2 as the searching keys, and extracts the corresponding pieces of function information, thereby identifying the functions that can be provided by the respective applications of the candidates (step S32-4).

The function identification unit 53 finally narrows down the applications to be included in the list based on whether the functions that can be provided by the applications of the candidates identified at step S32-4 are included in the functions available in the terminal 10 identified at step S32-3 (step S32-5). When any of functions that can be provided by the application identified at step S32-4 is included in the functions available in the terminal 10 identified at step S32-3, the function identification unit 53 includes the application in the list. When any of functions that can be provided by the application identified at step S32-4 is not included in the functions available in the terminal 10 identified at step S32-3, the function identification unit 53 does not include the application in the list.

In the second embodiment, the storage-read unit 59 searches the application URL management table (refer to FIG. 13) using the application IDs of the applications finally narrowed down at step S32-5 as the searching keys to extract the URL information about the icons corresponding to the application IDs (step S33). Processing from this step onwards is the same as that of the first embodiment, and thus description thereof is omitted.

The second embodiment can exclude the application having no function available in the terminal 10 from the list, thereby making it easy for the terminal 10 side to select the application.

### <<Supplemental explanation of embodiments>>

The relaying apparatus 30, the management system 50, the program supply system 90, and the maintenance system 100 in each of the embodiments may be structured by a single computer. The units (functions or units) of them may be divided and the divided units may be structured by a plurality of computers each allocated for any unit. When the program supply system 90 is structured by a single computer, a computer program transmitted by the program supply system 90 may be transmitted as a plurality of divided modules or transmitted without being divided. When the program supply system 90 is structured by a plurality of computers, a computer program may be transmitted from the computers as a plurality of divided modules.

The recording medium, such as CD-ROM, in which the terminal control program, the relaying apparatus program, or the transmission management program of each of the embodiments are stored, the HD 204 that stores therein the computer programs, and the program supply system 90 including the HD 204 are used as program products when the terminal control program, the relaying apparatus program, and the transmission management program are provided to a user and the like in domestically or overseas.

In the embodiments, the management system 50 transmits the access token including the function information about the terminal 10 to the terminal 10. The invention is not limited to the structure. For example, the management system 50 may transmit the access token including the function information about the terminal 10 directly to the application server 80.

The respective IDs of the embodiments indicate identification information used to uniquely identify each of them, such as languages, characters, symbols, or various signs. The respective IDs may be the identification information obtained by combining at least two of the languages, characters, symbols, and various signs.

For example, the application ID is an example of application identification information. The application identification information also includes the name of the application besides the application ID, for example. The terminal ID is an example of terminal identification information. The terminal identification information also includes a manufacturing number of the terminal 10, and a user ID allocated to the user of the terminal 10 besides the terminal ID. The icons illustrated in FIG. 21 may each include characters, pictograms, or pictograms including characters.

In the embodiments, the teleconference terminal is described as an example of the terminal 10. The terminal 10 is, however, not limited to this example. For example, one or both of the request origin terminal and the destination terminal may be an internet protocol (IP) telephone, an internet telephone, or a personal computer (PC). The terminal 10 may be a communication terminal that is an information processing terminal capable of not only performing communication but also performing various types of data communication, such as a smartphone, a tablet terminal, a game machine, or a vehicle navigation device. In this case, the communication management system 50 performs various types of processing as a communication management system.

### Reference Signs List

1 communication system
10 communication terminal
11 transmitting-receiving unit
12 operation input receiving unit
13 display control unit
14 start request unit
19 storage-read unit
21 transmitting-receiving unit
22 start unit
24 display control unit
25 function execution unit
29 storage-read unit
50 communication management system (an example of the access management system)
51 transmitting-receiving unit(an example of the control unit, an example of the model information receiving unit, the function information receiving unit)
52 authentication unit
53 function identification unit (an example of the function identification unit)
55 approval unit
59 storage-read unit
80 application server
81 transmitting-receiving unit
89 storage-read unit
1000 storage unit
5000 storage unit
5001 terminal authentication management DB
5003 application use management DB
5004 application URL management DB (position information management unit)
5005 terminal function management DB (an example of a communication terminal function management unit)
5006 application function management DB (an example of the application function management unit)
5007 access token management DB
8000 storage unit
8001 application hosting DB

### Citation List

### Patent Literature

Patent Literature 1: Japanese Patent Application Laid-open No. 2008-227577
Patent Literature 2: Japanese Patent Application Laid-open No. 2012-134940

## Claims

1. A management system (50) that manages access from a communication terminal (10aa, 10ab, 10ac, 10ad) to an application, the access management system (50) comprising:
a receiving unit (51) that receives model information indicating a model of the communication terminal (10aa, 10ab, 10ac, 10ad) and application information indicating an application that are transmitted from the communication terminal (10aa, 10ab, 10ac, lOad), the application information being associated with an application selected, by a user, from a plurality of applications being displayed on the communication terminal (10aa, 10ab, 10ac, lOad);
an identification unit (53) that identifies a function that is matched with a function capable of being provided by the application identified based on the application information received by the receiving unit (51) out of functions available in the communication terminal (lOaa, 10ab, 10ac, 10ad) identified based on the model information received by the receiving unit (51); and
a transmitting unit (51) that transmits, to the communication terminal (10aa, 10ab, 10ac, lOad), approval information indicating that use of the function corresponding to the function identified by the identification unit (53) is approved and access destination information indicating an access destination to access the application corresponding to the application information received by the receiving unit.

2. The management system (50) according to claim 1, wherein
the receiving unit (51) receives a request to start the application in the communication terminal (10aa, 10ab, 10ac, lOad), the request including the model information and the application information that are transmitted from the communication terminal (10aa, 10ab, 10ac, 10ad), and
the transmitting unit (51) transmits, to the communication terminal (10aa, 10ab, 10ac, lOad), the approval information and the access destination information in response to the reception of the request to start the application by the receiving unit (51).

3. The management system (50) according to claim 2, wherein the transmitting unit (51) transmits the approval information to the communication terminal (lOaa, 10ab, 10ac, 10ad) when the identification unit (53) identifies the function, while the transmitting unit (51) transmits a message indicating that the communication terminal (10aa, 10ab, 10ac, 10ad) is incapable of accessing the application when the identification unit fails to identify the function.

4. The management system (50) according to claim 3, wherein the transmitting unit (51) transmits, to the communication terminal (10aa, 10ab, 10ac, lOad), function information that indicates the function identified by the identification unit (53).

5. A computer readable recording medium that records therein a computer program causing a computer that manages access from a communication terminal (10aa, 10ab, 10ac, 10ad) to an application to execute:
receiving model information indicating a model of the communication terminal and application information indicating an application that are transmitted from the communication terminal (lOaa, 10ab, 10ac, lOad), the application information being associated with an application selected, by a user, from a plurality of applications being displayed on the communication terminal (10aa, 10ab, 10ac, lOad);
identifying a function that is matched with a function capable of being provided by the application identified based on the application information received by the receiving unit (51) out of functions available in the communication terminal (10aa, 10ab, 10ac, 10ad) identified based on the model information received at the receiving; and
transmitting, to the communication terminal (10aa, 10ab, 10ac, 10ad), approval information indicating that use of the function corresponding to the function identified at the identifying is approved and access destination information indicating an access destination of access to the application corresponding to the application information received at the receiving.

6. A management method implemented by a computer that manages access from a communication terminal (10aa, 10ab, 10ac, 10ad) to an application, the access management method comprising:
receiving model information indicating a model of the communication terminal (10aa, 10ab, 10ac, 10ad) and application information indicating an application that are transmitted from the communication terminal (10aa, 10ab, 10ac, lOad), the application information being associated with an application selected, by a user, from a plurality of applications being displayed on the communication terminal (10aa, 10ab, 10ac, lOad);
identifying a function that is matched with a function capable of being provided by the application identified based on the application information received at the receiving out of functions available in a communication terminal (10aa, 10ab, 10ac, 10ad) identified based on the model information received at the receiving; and
transmitting, to the communication terminal (10aa, 10ab, 10ac, 10ad), approval information indicating that use of the function corresponding to the function identified at the identifying is approved and access destination information indicating an access destination of access to the application corresponding to the application information received at the receiving.

7. The management method according to claim 6, wherein
the receiving includes receiving a request to start the application in the communication terminal (lOaa, 10ab, 10ac, lOad), the request including the model information and the application information that are transmitted from the communication terminal (10aa, 10ab, 10ac, 10ad), and
the transmitting includes transmitting, to the communication terminal (10aa, 10ab, 10ac, lOad), the approval information and the access destination information in response to the reception of the request to start the application at the receiving.

8. The management method according to claim 7, wherein the transmitting includes transmitting the approval information to the communication terminal (10aa, 10ab, 10ac, 10ad) when the function is identified at the identifying, while the transmitting includes transmitting a message indicating that the communication terminal is incapable of accessing the application when the function fails to be identified at the identifying.

9. The access management method according to claim 8, wherein the transmitting includes transmitting, to the communication terminal (10aa, 10ab, 10ac, 10ad), function information that indicates the function identified at the identifying.

## Patentansprüche

1. Managementsystem (50), das einen Zugriff von einem Kommunikationsendgerät (10aa, 10ab, 10ac, 10ad) auf eine Anwendung managt, wobei das Zugriffsmanagementsystem (50) umfasst:
eine Empfangseinheit (51), die Modellinformationen, die ein Modell des Kommunikationsendgeräts (10aa, 10ab, 10ac, 10ad) angeben, und Anwendungsinformationen, die eine Anwendung angeben, empfängt, die von dem Kommunikationsendgerät (10aa, 10ab, 10ac, 10ad) gesendet werden, wobei die Anwendungsinformationen einer Anwendung zugeordnet sind, die aus mehreren Anwendungen, die auf dem Kommunikationsendgerät (10aa, 10ab, 10ac, 10ad) angezeigt werden, durch einen Anwender ausgewählt ist;
eine Identifikationseinheit (53), die aus Funktionen, die in dem anhand der durch die Empfangseinheit (51) empfangenen Modellinformationen identifizierten Kommunikationsendgerät (10aa, 10ab, 10ac, 10ad) verfügbar sind, eine Funktion identifiziert, die an eine Funktion angepasst ist, die durch die anhand der durch die Empfangseinheit (51) empfangenen Anwendungsinformationen identifizierten Anwendung geliefert werden kann; und
eine Sendeeinheit (51), die an das Kommunikationsendgerät (10aa, 10ab, 10ac, 10ad) Genehmigungsinformationen, die angeben, dass eine Verwendung der Funktion, die der durch die Identifikationseinheit (53) identifizierten Funktion entspricht, genehmigt ist, und Zugriffsbestimmungsinformationen, die eine Zugriffsbestimmung angeben, um auf die Anwendung, die den durch die Empfangseinheit empfangenen Anwendungsinformationen entspricht, zuzugreifen, sendet.

2. Managementsystem (50) nach Anspruch 1, wobei
die Empfangseinheit (51) eine Anforderung empfängt, die Anwendung in dem Kommunikationsendgerät (10aa, 10ab, 10ac, 10ad) zu starten, wobei die Anforderung die Modellinformationen und die Anwendungsinformationen enthält, die von dem Kommunikationsendgerät (10aa, 10ab, 10ac, 10ad) gesendet wurden, und
die Sendeeinheit (51) die Genehmigungsinformationen und die Zugriffsbestimmungsinformationen als Reaktion auf den Empfang der Anforderung, die Anwendung zu starten, durch die Empfangseinheit (51), sendet.

3. Managementsystem (50) nach Anspruch 2, wobei die Sendeeinheit (51) die Genehmigungsinformationen an das Kommunikationsendgerät (10aa, 10ab, 10ac, 10ad) sendet, wenn die Identifikationseinheit (53) die Funktion identifiziert, während die Sendeeinheit (51) eine Nachricht sendet, die angibt, dass das Kommunikationsendgerät (lOaa, 10ab, 10ac, 10ad) nicht auf die Anwendung zugreifen kann, wenn die Identifikationseinheit scheitert, die Funktion zu identifizieren.

4. Managementsystem (50) nach Anspruch 3, wobei die Sendeeinheit (51) an das Kommunikationsendgerät (10aa, 10ab, 10ac, 10ad) Funktionsinformationen sendet, die die durch die Identifikationseinheit (53) identifizierte Funktion angeben.

5. Computerlesbares Aufzeichnungsmedium, in dem ein Computerprogramm aufgezeichnet ist, das bewirkt, dass ein Computer, der einen Zugriff von einem Kommunikationsendgerät (10aa, 10ab, 10ac, 10ad) auf eine Anwendung managt, Folgendes ausführt:
Empfangen von Modellinformationen, die ein Modell des Kommunikationsendgeräts angeben, und Anwendungsinformationen, die eine Anwendung angeben, die von dem Kommunikationsendgerät (10aa, 10ab, 10ac, 10ad) gesendet werden, wobei die Anwendungsinformationen einer Anwendung zugeordnet sind, die aus mehreren Anwendungen, die auf dem Kommunikationsendgerät (10aa, 10ab, 10ac, 10ad) angezeigt werden, durch einen Anwender ausgewählt ist;
Identifizieren einer Funktion, die an eine Funktion angepasst ist, die durch die Anwendung geliefert werden kann, die anhand der durch die Empfangseinheit (51) empfangenen Anwendungsinformationen identifiziert ist, aus Funktionen, die in dem Kommunikationsendgerät (10aa, 10ab, 10ac, 10ad), das anhand der durch die Empfangseinheit (51) empfangenen Modellinformationen identifiziert ist, verfügbar sind; und
Senden an das Kommunikationsendgerät (10aa, 10ab, 10ac, 10ad) von Genehmigungsinformationen, die angeben, dass eine Verwendung der Funktion, die der beim Identifizieren identifizierten Funktion entspricht, genehmigt ist, und von Zugriffsbestimmungsinformationen, die eine Zugriffsbestimmung angeben, um auf die Anwendung zuzugreifen, die den beim Empfangen empfangenen Anwendungsinformationen entspricht.

6. Managementverfahren, das durch einen Computer implementiert ist, der einen Zugriff von einem Kommunikationsendgerät (10aa, 10ab, 10ac, 10ad) auf eine Anwendung managt, wobei das Zugriffsmanagementverfahren Folgendes umfasst:
Empfangen von Modellinformationen, die ein Modell des Kommunikationsendgeräts (10aa, 10ab, 10ac, 10ad) angeben, und Anwendungsinformationen, die eine Anwendung angeben, die von dem Kommunikationsendgerät (10aa, 10ab, 10ac, 10ad) gesendet werden, wobei die Anwendungsinformationen einer Anwendung zugeordnet sind, die aus mehreren Anwendungen, die auf dem Kommunikationsendgerät (10aa, 10ab, 10ac, 10ad) angezeigt werden, durch einen Anwender ausgewählt ist;
Identifizieren einer Funktion, die an eine Funktion angepasst ist, die durch die Anwendung geliefert werden kann, die anhand der beim Empfangen empfangenen Anwendungsinformationen identifiziert ist, aus Funktionen, die in dem Kommunikationsendgerät (10aa, 10ab, 10ac, 10ad), das anhand der beim Empfangen empfangenen Modellinformationen identifiziert ist, verfügbar sind; und
Senden an das Kommunikationsendgerät (10aa, 10ab, 10ac, 10ad) von Genehmigungsinformationen, die angeben, dass eine Verwendung der Funktion, die der beim Identifizieren identifizierten Funktion entspricht, genehmigt ist, und von Zugriffsbestimmungsinformationen, die eine Zugriffsbestimmung angeben, um auf die Anwendung, die den beim Empfangen empfangenen Anwendungsinformationen entspricht, zuzugreifen.

7. Managementverfahren nach Anspruch 6, wobei
das Empfangen enthält, eine Anforderung, die Anwendung in dem Kommunikationsendgerät (10aa, 10ab, 10ac, 10ad) zu starten, zu empfangen, wobei die Anforderung die Modellinformationen und die Anwendungsinformationen enthält, die von dem Kommunikationsendgerät (10aa, 10ab, 10ac, 10ad) gesendet werden, und
das Senden enthält, die Genehmigungsinformationen und die Zugriffsbestimmungsinformationen als Reaktion auf den Empfang der Anforderung, die Anwendung zu starten, beim Empfangen an das Kommunikationsendgerät (10aa, 10ab, 10ac, 10ad) zu senden.

8. Managementverfahren nach Anspruch 7, wobei das Senden enthält, die Genehmigungsinformationen an das Kommunikationsendgerät (10aa, 10ab, 10ac, 10ad) zu senden, wenn die Funktion beim Identifizieren identifiziert wird, während das Senden enthält, eine Nachricht zu senden, die angibt, dass das Kommunikationsendgerät nicht auf die Anwendung zugreifen kann, wenn die Identifizierung der Funktion beim Identifizieren scheitert.

9. Zugriffsmanagementverfahren nach Anspruch 8, wobei das Senden enthält, an das Kommunikationsendgerät (10aa, 10ab, 10ac, 10ad) Funktionsinformationen zu senden, die die beim Identifizieren identifizierte Funktion angeben.

## Revendications

1. Système de gestion (50) qui gère l'accès depuis un terminal de communication (10aa, 10ab, 10ac, 10ad) à une application, le système de gestion d'accès (50) comprenant :
une unité de réception (51) qui reçoit des informations de modèle indiquant un modèle du terminal de communication (10aa, 10ab, 10ac, 10ad) et des informations d'application indiquant une application qui sont transmises depuis le terminal de communication (10aa, 10ab, 10ac, 10ad), les informations d'application étant associées à une application sélectionnée, par un utilisateur, parmi une pluralité d'applications étant affichées sur le terminal de communication (10aa, 10ab, 10ac, 10ad) ;
une unité d'identification (53) qui identifie une fonction qui est mise en correspondance avec une fonction capable d'être produite par l'application identifiée en fonction des informations d'application reçues par l'unité de réception (51) sur des fonctions disponibles dans le terminal de communication (10aa, 10ab, 10ac, 10ad) identifiées en fonction des informations de modèle reçues par l'unité de réception (51) ; et
une unité de transmission (51) qui transmet, au terminal de communication (10aa, 10ab, 10ac, 10ad), des informations d'autorisation indiquant que l'utilisation de la fonction correspondant à la fonction identifiée par l'unité d'identification (53) est autorisée et des informations de destination d'accès indiquant une destination d'accès pour accéder à l'application correspondant aux informations d'application reçues par l'unité de réception.

2. Système de gestion (50) selon la revendication 1, dans lequel
l'unité de réception (51) reçoit une demande de démarrer l'application dans le terminal de communication (10aa, 10ab, 10ac, 10ad), la demande comprenant les informations de modèle et les informations d'application qui sont transmises depuis le terminal de communication (10aa, 10ab, 10ac, 10ad), et
l'unité de transmission (51) transmet, au terminal de communication (10aa, 10ab, 10ac, 10ad), les informations d'autorisation et les informations de destination d'accès en réponse à la réception de la demande de démarrer l'application par l'unité de réception (51).

3. Système de gestion (50) selon la revendication 2, dans lequel l'unité de transmission (51) transmet les informations d'autorisation au terminal de communication (10aa, 10ab, 10ac, 10ad) lorsque l'unité d'identification (53) identifie la fonction, tandis que l'unité de transmission (51) transmet un message indiquant que le terminal de communication (lOaa, 10ab, 10ac, 10ad) est incapable d'accéder à l'application lorsque l'unité d'identification n'identifie pas la fonction.

4. Système de gestion (50) selon la revendication 3, dans lequel l'unité de transmission (51) transmet, au terminal de communication (10aa, 10ab, 10ac, 10ad), des informations de fonction qui indiquent la fonction identifiée par l'unité d'identification (53).

5. Support d'enregistrement lisible par ordinateur qui enregistre à l'intérieur un programme informatique amenant un ordinateur qui gère l'accès depuis un terminal de communication (10aa, 10ab, 10ac, 10ad) à une application à effectuer :
la réception d'informations de modèle indiquant un modèle du terminal de communication et d'informations d'application indiquant une application qui sont transmises depuis le terminal de communication (10aa, 10ab, 10ac, 10ad), les informations d'application étant associées à une application sélectionnée, par un utilisateur, parmi une pluralité d'applications étant affichées sur le terminal de communication (10aa, 10ab, 10ac, 10ad) ;
l'identification d'une fonction qui est mise en correspondance avec une fonction capable d'être produite par l'application identifiée en fonction des informations d'application reçues par l'unité de réception (51) sur des fonctions disponibles dans le terminal de communication (10aa, 10ab, 10ac, 10ad) identifiées en fonction des informations de modèle reçues lors de la réception ; et
la transmission, au terminal de communication (10aa, 10ab, 10ac, 10ad), d'informations d'autorisation indiquant que l'utilisation de la fonction correspondant à la fonction identifiée lors de l'identification est autorisée et d'informations de destination d'accès indiquant une destination d'accès à l'application correspondant aux informations d'application reçues lors de la réception.

6. Procédé de gestion mis en oeuvre par un ordinateur qui gère l'accès depuis un terminal de communication (10aa, 10ab, 10ac, 10ad) à une application, le procédé de gestion d'accès comprenant :
la réception d'informations de modèle indiquant un modèle du terminal de communication (10aa, 10ab, 10ac, 10ad) et d'informations d'application indiquant une application qui sont transmises depuis le terminal de communication (10aa, 10ab, 10ac, 10ad), les informations d'application étant associées à une application sélectionnée, par un utilisateur, parmi une pluralité d'applications étant affichées sur le terminal de communication (10aa, 10ab, 10ac, 10ad) ;
l'identification d'une fonction qui est mise en correspondance avec une fonction capable d'être produite par l'application identifiée en fonction des informations d'application reçues lors de la réception sur des fonctions disponibles dans un terminal de communication (10aa, 10ab, 10ac, 10ad) identifiées en fonction des informations de modèle reçues lors de la réception ; et
la transmission, au terminal de communication (10aa, 10ab, 10ac, 10ad), d'informations d'autorisation indiquant que l'utilisation de la fonction correspondant à la fonction identifiée lors de l'identification est autorisée et d'informations de destination d'accès indiquant une destination d'accès à l'application correspondant aux informations d'application reçues lors de la réception.

7. Procédé de gestion selon la revendication 6, dans lequel
la réception comprend la réception d'une demande de démarrer l'application dans le terminal de communication (10aa, 10ab, 10ac, 10ad), la demande comprenant les informations de modèle et les informations d'application qui sont transmises depuis le terminal de communication (10aa, 10ab, 10ac, 10ad), et
la transmission comprend la transmission, au terminal de communication (10aa, 10ab, 10ac, 10ad), des informations d'autorisation et des informations de destination d'accès en réponse à la réception de la demande de démarrer l'application lors de la réception.

8. Procédé de gestion selon la revendication 7, dans lequel la transmission comprend la transmission des informations d'autorisation au terminal de communication (10aa, 10ab, 10ac, 10ad) lorsque la fonction est identifiée lors de l'identification, tandis que la transmission comprend la transmission d'un message indiquant que le terminal de communication est incapable d'accéder à l'application lorsque la fonction n'est pas identifiée lors de l'identification.

9. Procédé de gestion d'accès selon la revendication 8, dans lequel la transmission comprend la transmission, au terminal de communication (10aa, 10ab, 10ac, 10ad), d'informations de fonction qui indiquent la fonction identifiée lors de l'identification.
